# EUROPEAN PATENT SPECIFICATION

(11) **EP 2 061 239 B1**
(45) Date of publication and mention of the grant of the patent: **20.09.2017**
(21) Application number: 08169362.4
(22) Date of filing: 18.11.2008
(51) Int. Cl.: H04N 5/76, G11B 27/00, H04N 5/783, G11B 27/10, G11B 27/30

(54) **Methods and apparatus for identifying video locations in a video stream using text data**
Verfahren und Anlagen zur Identifikation von Videobereichen in einem Videostrom unter Verwendung von Textdaten
Procédés et appareils pour identifier des emplacements vidéo dans un flux vidéo en utilisant des données de texte

(30) Priority: 19.11.2007 US 942111; 20.11.2007 US 942896; 20.11.2007 US 942901
(43) Date of publication of application: 20.05.2009
(73) Proprietor: EchoStar Technologies L.L.C., Englewood, CO 80112 (US)
(72) Inventor: Casagrande, Steven Michael, Castle Rock, CO 80108 (US); Hodge, Kenneth Robert, Castle Rock, CO 80109 (US)
(74) Representative: Beck Greener

(56) References cited:
- WO-A1-2005/096625
- WO-A1-2006/003585
- WO-A1-2007/056532
- US-A1- 2002 069 218
- US-A1- 2007 212 030

## Description

The present invention relates to a method of filtering a video stream, to a method for generating metadata for use in a filtering method, and to a digital video recorder.

Digital video recorders (DVRs) and personal video recorders (PVRs) allow viewers to record video in a digital format to a disk drive or other type of storage medium for later playback. DVRs are often incorporated into set-top boxes for satellite and cable television services. A television program stored on a set-top box allows a viewer to perform time shifting functions, and may additionally allow a viewer to skip over commercial breaks and other portions of the recording that the viewer does not desire to watch. However, the user performs this function manually, for example, using a fast forward button of a remote control associated with the DVR. This manual fast forwarding is an inconvenience for the user. Further, manual fast forwarding by a user often leads to inaccurate results, because the user may fast forward past portions of the recording they desire to watch, or may resume playback during the portion of the recording that they want to skip over. WO 2007/056532 A1, discloses a method and apparatus for merging content segments from a number of discrete media content in preparation for playback. Meta-data corresponding to the plurality of discrete media is obtained or derived using a plurality of processing techniques. The merged media content can be implemented as a playlist identifying the content segments to be merged for playback. The present invention seeks to reduce the disadvantages of the prior art.

According to a first aspect of the present invention there is provided a method for filtering a video stream, the method comprising:
parsing text data associated with the video stream that is displayable to a user to identify at least one portion of the video stream to skip during presentation of the video stream;
filtering the video stream based on the identified at least one portion of the video stream; and
presenting the filtered video stream to a user.

Preferably, parsing text data associated with the video stream further comprises:
receiving metadata, including a text string contained in the text data, that identifies the at least one portion of the video stream to skip during presentation of the video stream.

In an embodiment, parsing text data associated with the video stream further comprises:
indexing the text data according to a presentation order;
parsing the text data to identify a location in the video stream corresponding to a presentation of the text string; and
creating at least one bookmark, identifying at least one boundary of the at least one portion of the video stream, based on the location in the video stream.

In an embodiment, receiving metadata and creating at least one bookmark further comprises:
receiving a first offset, relative to the location in the video stream, that identifies a beginning of the at least one portion of the video stream;
receiving a second offset, relative to the location in the video stream, that identifies an ending of the at least one portion of the video stream;
creating a beginning bookmark, identifying the beginning of the at least one portion of the video stream, based on the location and the first offset; and
creating an ending bookmark, identifying the ending of the at least one portion of the video stream, based on the location and the second offset.

Preferably, the text string is unique within the text data.

In an embodiment, the method further comprises
recording the video stream including at least one segment of a show, at least one interstitial of the show, and closed captioning data associated with the at least one segment of the show;
receiving metadata associated with the video stream, identifying boundaries of the at least one segment of the show, the metadata comprising at least one text string, contained in the closed captioning data when transmitted by a content provider, that is associated with an anchor frame of the at least one segment, a first offset, associated with the at least one text string, that is relative to the anchor frame, the first offset identifying a beginning of the segment and a second offset, associated with the at least one text string, that is relative to the anchor frame, the second offset identifying an ending of the segment;
creating a beginning bookmark, identifying the beginning of the at least one segment, based on the anchor frame and the first offset;
creating an ending bookmark, identifying the ending of the at least one segment, based on the anchor frame and the second offset; and
wherein presenting the filtered video stream comprises presenting the at least one segment of the video stream between the beginning bookmark and the ending bookmark.

For example, the method may further comprise
parsing the closed captioning data recorded to locate the at least one text string and the anchor frame;
determining that the at least one text string is not located in the closed captioning data recorded;
receiving a second text string, located in the closed captioning data transmitted by the content provider, that is associated with a second anchor frame of the at least one segment;
receiving a third offset, associated with the second text string, that is relative to the second anchor frame, the third offset identifying a beginning of the segment;
receiving a fourth offset, associated with the second text string, that is relative to the second anchor frame, the fourth offset identifying an ending of the segment;
parsing the closed captioning data recorded to locate the second text string and the second anchor frame; and
filtering the at least one interstitial from the recorded video stream, based on the second anchor frame, the third offset, and the fourth offset, to generate the filtered video stream.

The present invention also extends to a digital video recorder comprising:
a receiver for receiving a video stream, and for receiving closed captioning data associated with the video stream;
recording means arranged to store the video stream on a storage medium for subsequent presentation to a user;
parsing means arranged to index the closed captioning data according to a presentation order, and arranged to parse the closed captioning data that is displayable to the user associated with the video stream to identify at least one portion of the video stream to skip during presentation of the video stream; and
presentation means for filtering the video stream based on the identified at least one portion of the video stream, and for presenting the filtered video stream to the user.

Preferably, the receiver is arranged to receive metadata, including a text string contained in the closed captioning data, that identifies the at least one portion of the video stream to skip during presentation of the video stream.

In an embodiment, the metadata further includes a first offset relative to the location in the video stream, that identifies a beginning of the at least one portion of the video stream, and a second offset relative to the location in the video stream, that identifies an ending of the at least one portion of the video stream; and
the parsing means is arranged to parse the text data to identify a location in the video stream corresponding to a presentation of the text string, creates a beginning bookmark, identifying the beginning of the at least one portion of the video stream, based on the location and the first offset, and creates an ending bookmark, identifying the ending of the at least one portion of the video stream, based on the location and the second offset.

Preferably, the text string is unique within the closed captioning data.

In an embodiment, the presentation means is arranged to present an indicator to the user that the at least one portion of the video stream was skipped during the presentation of the video stream.

According to a further aspect of the present invention, there is provided a method for generating metadata utilized to filter content from a video stream of a television show, the method comprising:
receiving the video stream including at least one segment of the show, at least one interstitial of the show, and closed captioning data associated with the at least one segment of the show;
reviewing the video stream to identify at least one boundary of the at least one segment of the show;
parsing the closed captioning data corresponding to the at least one segment of the show to locate a text string that identifies the at least one segment within the video stream, the text string corresponding to an anchor frame of the at least one segment;
determining an offset of the at least one boundary of the at least one segment of the show relative to the anchor frame; and
transmitting the text string and the offset to a digital video recorder (DVR), wherein the DVR utilizes the text string and the offset to skip the at least one interstitial during presentation of the video stream.

Preferably, the text string is unique within the closed captioning data for the at least one segment of the show.

In an embodiment, reviewing the video stream further comprises:
presenting the video stream to a user; and
receiving user input indicating a transition between the at least one interstitial and the at least one segment of the video stream.

The present invention also extends to a method for filtering a video stream, the method comprising: recording a video stream including at least one segment of a show, at least one interstitial of the show, and closed captioning data associated with the at least one segment of the show; receiving metadata associated with the video stream that identifies boundaries of the at least one segment of the show; and processing the closed captioning data, to filter the at least one interstitial from the recorded video stream, based on the metadata, to present a filtered video stream to the user.

In a preferred embodiment, receiving metadata further comprises: receiving at least one text string, contained in the closed captioning data when transmitted by a content provider, that is associated with an anchor frame of the at least one segment; receiving a first offset, associated with the at least one text string, that is relative to the anchor frame, the first offset identifying a beginning of the segment; and receiving a second offset, associated with the at least one text string, that is relative to the anchor frame, the second offset identifying an ending of the segment.

Preferably, processing the closed captioning data and presenting the filtered video stream to a user further comprises: creating a beginning bookmark, identifying the beginning of the at least one segment, based on the anchor frame and the first offset; creating an ending bookmark, identifying the ending of the at least one segment, based on the anchor frame and the second offset; and presenting the at least one segment of the video stream between the beginning bookmark and the ending bookmark.

In an embodiment, receiving metadata and processing the closed captioning data further comprises: parsing the closed captioning data recorded to locate the at least one text string and the anchor frame; determining that the at least one text string is not located in the closed captioning data recorded; receiving a second text string, located in the closed captioning data transmitted by the content provider, that is associated with a second anchor frame of the at least one segment; receiving a third offset, associated with the second text string, that is relative to the second anchor frame, the third offset identifying a beginning of the segment; receiving a fourth offset, associated with the second text string, that is relative to the second anchor frame, the fourth offset identifying an ending of the segment; parsing the closed captioning data recorded to locate the second text string and the second anchor frame; and filtering the at least one interstitial from the recorded video stream, based on the second anchor frame, the third offset, and the fourth offset, to generate the filtered video stream.

The present invention also extends to a DVR comprising a receiver for receiving a video stream including at least one segment of a show, at least one interstitial of the show, and closed captioning data associated with the at least one segment of the show; recording means for storing the video stream on a storage medium for subsequent presentation to a user; and processing means for receiving metadata associated with the video stream identifying boundaries of the at least one segment of the show, indexing the closed captioning data according to a presentation order, and parsing the closed captioning data associated with the video stream, to filter the at least one interstitial from the recorded video stream based on the metadata, to present a filtered video stream to the user.

In an embodiment, the metadata comprises: at least one text string, located in the closed captioning data when transmitted by a content provider, that is associated with an anchor frame of the at least one segment; a first offset, associated with the at least one text string, that is relative to the anchor frame, the first offset identifying a beginning of the segment; and a second offset, associated with the at least one text string, that is relative to the anchor frame, the second offset identifying an ending of the segment.

In an embodiment, the processing means is arranged to: create a beginning bookmark, identifying the beginning of the at least one segment based on the anchor frame and the first offset; create an ending bookmark, identifying the ending of the at least one segment, based on the anchor frame and the second offset; and present the at least one segment of the video stream between the beginning bookmark and the ending bookmark.

In an embodiment, the processing means is arranged to: parse the closed captioning data recorded to locate the at least one text string and the anchor frame; determine that the at least one text string is not located in the closed captioning data recorded; receive a second text string, located in the closed captioning data transmitted by the content provider, that is associated with a second anchor frame of the at least one segment; receive a third offset, associated with the second text string, that is relative to the second anchor frame, the third offset identifying a beginning of the segment; receive a fourth offset, associated with the second text string, that is relative to the second anchor frame, the fourth offset identifying an ending of the segment; parse the closed captioning data recorded to locate the second text string and the second anchor frame; and filter the at least one interstitial from the recorded video stream, based on the second anchor frame, the third offset, and the fourth offset, to generate the filtered video stream.

According to a further aspect of the invention, there is provided a method for skipping interstitials in a video stream, the method comprising: recording a video stream including at least one segment of a show, at least one interstitial of the show, and closed captioning data associated with the at least one segment of the show; receiving metadata associated with the video stream, identifying boundaries of the at least one segment of the show, the metadata comprising a plurality of unique text strings located in the closed captioning data when transmitted by a content provider, each unique text string associated with an anchor frame of the at least one segment; indexing the closed captioning data recorded according to a presentation order; processing the closed captioning data to locate a first anchor frame associated with a first unique text string of the plurality of unique text strings; determining that the first unique text string is not located within the closed captioning data recorded; processing the closed captioning data recorded to locate a second anchor frame associated with a second unique text string of the plurality of unique text strings; creating a beginning bookmark, identifying the beginning of the at least one segment, based on the second anchor frame and a first offset associated with the second anchor frame; creating an ending bookmark, identifying the ending of the at least one segment, based on the second anchor frame and a second offset associated with the second anchor frame; and presenting the at least one segment between the beginning bookmark and the ending bookmark.

Preferably, the text string is unique within the closed captioning data.

The invention also extends to a method for generating metadata utilized to filter content from a video stream, the method comprising: reviewing a video stream to identify at least one portion of the video stream to skip during presentation of the video stream; parsing text data associated with the video stream to identify a text string in the text data that identifies at least one boundary of the portion of the video stream; and providing the text string to a DVR, wherein the DVR utilizes the text string to skip the portion of the video stream during presentation of the video stream by the DVR.

Preferably, the method further comprises: determining a location of the text string in the video stream; determining an offset of the at least one boundary relative to the location of the text string; and providing the offset to the DVR, wherein the DVR utilizes the offset to skip the at least one portion of the video stream during presentation of the video stream by the DVR.

Preferably, the text string is unique within the text data.

In an embodiment, providing the text string further comprises broadcasting a data file to the DVR in a metadata stream.

In an embodiment, reviewing the video stream further comprises: receiving user input indicating a transition between the portion of the video stream to skip during presentation of the video stream and other portions of the video stream.

Additionally and/or alternatively, the invention provides a method for generating metadata utilized to filter content from a video stream of a television show, the method comprising: receiving the video stream including at least one segment of the show, at least one interstitial of the show, and closed captioning data associated with the at least one segment of the show; reviewing the video stream to identify at least one boundary of the at least one segment of the show; parsing the closed captioning data corresponding to the at least one segment of the show to locate a text string that identifies the at least one segment within the video stream, the text string corresponding to an anchor frame of the at least one segment; determining an offset of the at least one boundary of the at least one segment of the show relative to the anchor frame; and providing the text string and the offset to a DVR, wherein the DVR utilizes the text string and the offset to skip the at least one interstitial during presentation of the video stream.

Preferably, the text string is unique within the closed captioning data for the at least one segment of the show.

In an embodiment, reviewing the video stream further comprises:
presenting the video stream to a user; and receiving user input indicating a transition between the at least one interstitial and the at least one segment of the video stream.

In an embodiment, receiving the video stream and parsing the closed captioning data further comprises: recording the video stream during a broadcast of the show; and parsing the recorded closed captioning data to locate the text string.

Additionally and/or alternatively the present invention extends to a method for generating metadata utilized to filter interstitials from a television show, the method comprising: recording the show in a file during a first broadcast time, the file including at least one segment of the show, at least one interstitial of the show, and closed captioning data associated with the at least one segment of the show; reviewing video data of the file to identify a transition between the at least one segment of the show and the at least one interstitial of the show; parsing the closed captioning data corresponding to the at least one segment of the show to locate a text string that identifies the at least one segment within the video stream, the text string corresponding to an anchor frame of the at least one segment; determining an offset of the transition relative to the anchor frame; and providing the text string and the offset to a DVR recording the show during a second broadcast time, wherein the DVR utilizes the text string and the offset to skip the at least one interstitial during presentation of the video stream.

Preferably, the first broadcast time is in a first time zone, and the second broadcast time is in a second time zone.

Preferably, the text string is unique within the closed captioning data for the at least one segment of the show.

According to a further aspect of the present invention there is provided a system comprising a metadata generation apparatus including: a receiver for receiving a first television broadcast of a television show, the first television broadcast including at least one segment of the show, at least one interstitial of the show, and closed captioning data associated with the at least one segment of the show; presentation means for presenting the first television broadcast to a user; identification means for receiving user input identifying a transition between the at least one interstitial of the show and the at least one segment of the show, for parsing the closed captioning data corresponding to the at least one segment of the show to locate a text string that identifies the at least one segment within the first television broadcast, the text string corresponding to an anchor frame of the at least one segment, and the identification means determining an offset of the transition relative to the anchor frame.

Preferably, the system further comprises a transmission network communicatively coupled to the identification means that provides the text string and the offset to a DVR, wherein the DVR utilizes the text string and the offset to skip the at least one interstitial during presentation of the video stream.

Preferably, the text string is unique within the closed captioning data for the at least one segment of the show.

In an embodiment, recording means of the metadata generation apparatus is arranged to record the first television broadcast to a storage medium, and the presentation means is arranged to present the recorded first television broadcast to the user.

In an embodiment, the transmission network provides a second television broadcast of the television show to the DVR.

In an embodiment, the transmission network provides the first television broadcast to the metadata generation apparatus.

In an embodiment, the transmission network provides the text string and the offset to the DVR as a broadcast.

In an embodiment, the transmission network provides the text string and the offset to the DVR responsive to a request from the DVR.

In an embodiment, the first television broadcast is in a first time zone, and the second television broadcast is in a second time zone.

Additionally and/or alternatively, the present invention extends to a method for providing a user with locations of interstitials in a video stream of a show, the method comprising: providing a recording of the video stream including at least one segment of the show and at least one interstitial of the show; identifying a location of the at least one interstitial within the recording; and presenting a progress bar during presentation of the video stream that indicates the location of the at least one interstitial within the recording and a duration of the at least one interstitial.

In an embodiment, providing the recording and identifying the location of the at least one interstitial within the recording further comprises: receiving text data associated with the video stream; and parsing the text data to identify the location and the duration of the at least one interstitial within the recording.

In an embodiment, parsing the text data further comprises: indexing the text data according to a presentation order; receiving metadata, including a string contained in the text data, that correlates to the location of the at least one interstitial; parsing the text data to identify a second location in the video stream corresponding to a presentation of the string; and identifying the location of the at least one interstitial based on the second location of the string.

In an embodiment, receiving metadata and identifying the location of the interstitial further comprises: receiving an offset, relative to the second location in the video stream, that correlates to the location of the at least one interstitial; and identifying the location of the at least one interstitial based on the second location of the string and the offset.

In an embodiment, the method further comprises: determining a duration of the at least one interstitial; and presenting the duration of the at least one interstitial in association with the presentation of the video stream.

In an embodiment, presenting the progress bar further comprises:
presenting the location of the at least one interstitial using a first indicator;
and presenting a location of the at least one segment using a second indicator.

Additionally and/or alternatively, the present invention extends to a method for providing a user with a progress bar during presentation of a video stream, the method comprising: recording the video stream including at least one segment of a show, at least one interstitial of the show, and text data associated with the video stream; parsing the text data to identify a transition within the recording between the at least one segment of the show and the at least one interstitial of the show and to identify a duration of the at least one interstitial; and presenting a progress bar during presentation of the video stream that indicates the transition within the recording between the at least one segment of the show and the at least one interstitial of the show, and that indicates the duration of the at least one interstitial.

Preferably, parsing the text data further comprises: indexing the text data according to a presentation order; receiving metadata, including a string contained in the text data, that correlates to a first location of the transition; parsing the text data to identify a second location in the video stream corresponding to a presentation of the string; and identifying the first location of the transition based on the second location of the string.

In an embodiment, receiving metadata and identifying the first location of the transition further comprises: receiving an offset, relative to the second location in the video stream, that correlates to the first location of the transition; and identifying the first location of the transition based on the second location of the string and the offset.

In an embodiment, presenting the progress bar further comprises: presenting a location of the at least one interstitial using a first indicator; and presenting a location of the at least one segment using a second indicator.

Additionally and/or alternatively, the present invention extends to a method for presenting information regarding a recorded television show, the method comprising: providing a recording of the television show, the recording including at least one segment of the television show and at least one interstitial; identifying the at least one interstitial of the recording; determining a first duration of the recording; determining a second duration of the at least one segment of the recording; and presenting the first duration and the second duration to the user in association with a description of the recording.

Preferably, identifying the at least one interstitial of the recording further comprises identifying the at least one interstitial of the recording based on text data associated with the at least one segment of the television show.

In an embodiment, identifying the at least one interstitial of the recording based on the text data and determining the second duration of the at least one segment further comprises: indexing the text data according to a presentation order; receiving metadata, including a first string contained in the text data, that correlates to a first boundary of the at least one interstitial, and a second string contained in the text data, that correlates to a second boundary of the at least one interstitial; parsing the text data to identify a first location of the first boundary based on the first string; parsing the text data to identify a second location of the second boundary based on the second string; and determining the second duration of the at least one segment based on the first boundary and the second boundary.

According to a further aspect of the present invention, there is provided a DVR comprising: a receiver for receiving a video stream including at least one segment of a show, at least one interstitial of the show, and closed captioning data associated with the at least one segment of the show; and recording means for storing the video stream on a storage medium for subsequent presentation to a user, the DVR further comprising processing means for receiving metadata associated with the video stream identifying boundaries of the at least one segment of the show; for indexing the closed captioning data according to a presentation order; parsing the closed captioning data associated with the video stream, to identify a transition within the recording between the at least one segment of the show and the at least one interstitial of the show, and for determining a duration of the at least one interstitial; and presenting a progress bar during presentation of the video stream that indicates the transition within the recording between the at least one segment of the show and the at least one interstitial of the show and that presents the duration of the at least one interstitial.

In an embodiment, the processing means indexes the text data according to a presentation order, receives metadata, including a string contained in the text data, that correlates to a first location of the transition, parses the text data to identify a second location in the video stream corresponding to a presentation of the string, and identifies the first location of the transition based on the second location of the string.

In an embodiment, the processing means receives an offset, relative to the second location in the video stream, that correlates to the first location of the transition, and identifies the first location of the transition based on the second location of the string and the offset.

In an embodiment, the processing means presents the location of the at least one interstitial using a first indicator, and presents a location of the at least one segment using a second indicator.

The present invention also extends to a DVR comprising: storage means for storing a plurality of recordings of television shows, some of the recordings including at least one segment of the television show and at least one interstitial; parsing means for identifying at least one of the recordings that includes at least one interstitial, that identifies the at least one interstitial of the at least one of the recordings, and that determines a duration of the at least one segment of the at least one of the recordings; and presentation means for presenting a menu including the plurality of recordings to a user, the menu displaying the first duration in association with a description of the at least one of the recordings.

In an embodiment, the parsing means identifies the at least one interstitial of the at least one of the recordings based on text data associated with the at least one segment of the television show.

In an embodiment, the parsing means: indexes the text data according to a presentation order, receives metadata, including a first string contained in the text data, that correlates to a first boundary of the at least one interstitial, and a second string contained in the text data, that correlates to a second boundary of the at least one interstitial; parses the text data to identify a first location of the first boundary based on the first string; parses the text data to identify a second location of the second boundary based on the second string; and determines the duration of the at least one segment based on the first boundary and the second boundary.

Embodiments of the present invention will hereinafter be described, by way of example, with reference to the accompanying drawings, in which:
FIG. 1 illustrates an exemplary entertainment system,
FIG. 2 illustrates an embodiment of a content distribution system,
FIG. 3 shows functional components of a DVR in the system of FIG. 2,
FIG. 4 illustrates an embodiment of a satellite broadcast system,
FIG. 5 illustrates an embodiment of a cable television distribution system,
FIG. 6 illustrates an embodiment of a process for filtering a video stream based on text data,
FIG. 7 illustrates an embodiment of a process for filtering interstitials from a video stream based on text data,
FIG. 8 illustrates the relationship between variables of segment metadata,
FIG. 9 shows an example of a metadata stream transmitted to a DVR,
FIG. 10 illustrates a process for creating segment bookmarks of a recording,
FIG. 11 illustrates an embodiment of a filtering system for generating metadata utilized by a DVR to filter content from a video stream,
FIG. 12 shows functional components of the metadata generation apparatus of FIG. 11,
FIG. 13 illustrates a process for generating metadata utilized by a DVR to filter content from a video stream,
FIG. 14 illustrates a process for generating metadata utilized by a DVR to filter content from a video stream of a television show,
FIG. 15 illustrates an embodiment of a progress bar,
FIG. 16 illustrates a menu of recordings on a DVR available for playback,
FIG. 17 illustrates an embodiment of a process for providing a user with locations of interstitials in a video stream of a show, and
FIG. 18 illustrates an embodiment of a process for presenting information regarding a recorded television show.

In the drawings, the same or similar components are referred to by the same reference numerals.

The various embodiments described herein generally provide apparatus, systems and methods which facilitate the reception, processing, and outputting of audio/video (A/V) content. In short, various embodiments described herein provide apparatus, system and/or methods for filtering content from an A/V stream based on data included in the A/V stream or associated with the A/V stream.

In at least one embodiment, the A/V stream to be received, processed, outputted and/or communicated may come in any form of a video stream. It is to be appreciated that the video stream may be supplied by any source, such as an over-the-air broadcast, a satellite or cable television distribution system, a digital video disk (DVD) or other optical disk, the internet or other communication networks, and the like. In at least one embodiment, the video stream may include text data, such as closed captioning data or subtitles, that is included in the video stream or associated with the video stream. Thus, in at least one embodiment, the video stream may comprise video data, audio data and text data.

In various embodiments described herein, the text data corresponding with an A/V stream is processed to identify portions of the A/V stream. An A/V stream will also be referred to herein as a video stream. However, it is to be appreciated that a video stream may include an associated audio component. In at least one embodiment, the boundaries of the identified portions of the video stream may be indexed for utilization during presentation of the video stream. The portions of the video stream between indexed boundaries may then be designated for presentation to a user, or may be designated for skipping during presentation of the video stream. Thus, in at least one embodiment, portions of a video stream that a user desires to view may be presented to the user, and portions of the video stream that a user desires not to view may be skipped during presentation of the video stream.

At least one embodiment described herein facilitates the generation of metadata utilized by a DVR to filter content from an A/V stream. More particularly, various embodiments described herein provide apparatus, systems and/or methods for identifying text data associated with video data in an A/V stream that may be utilized to identify portions of the A/V stream that are to be skipped during presentation of the A/V stream by a DVR or other type of recording device.

Portions of an A/V stream that are to be skipped during presentation by a DVR are identified, and the video frames at the boundaries and/or transitions of these portions of the A/V stream are determined. In at least one embodiment, the boundaries of the identified portions of the A/V stream may be indexed for utilization during presentation of the A/V stream. The portions of the A/V stream between indexed boundaries may then be designated for presentation to a user, or may be designated for skipping during presentation of the A/V stream. Thus, in at least one embodiment, portions of an A/V stream that a user desires to view may be presented to the user, and portions of the A/V stream that a user desires not to view may be skipped during presentation of the A/V stream. The text data corresponding with an A/V stream is processed to determine strings in the text data that may be utilized to identify portions of the A/V stream that are to be presented and/or skipped during presentation of the A/V stream by a DVR. The strings and/or other information are provided to the DVR, and the DVR utilizes the received information to process the A/V stream and skip certain portions of the A/V stream.

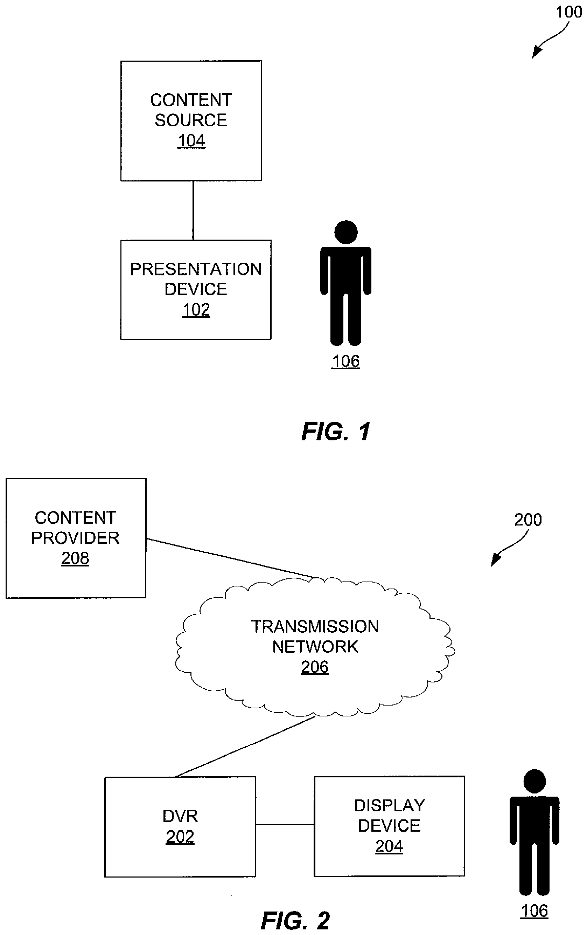

FIG. 1 illustrates an embodiment of an entertainment system 100. The entertainment system 100 presents content to a user 106. In at least one embodiment, the content presented to the user 106 includes a video stream, such as a television program, movie or other recorded content and the like. The entertainment system 100 includes a presentation device 102 and a content source 104. Each of these components is discussed in greater detail below.

The presentation device 102 is configured to receive content from one or more content source(s) 104, and to present the received content to the user 106. In at least one embodiment, the presentation device 102 is a display device configured to display content to the user 106. In other embodiments, the presentation device 102 is a set-top box (e.g., a satellite or cable television converter box), digital video recorder (DVR) or other similar device that processes and provides one or more audio and/or video streams to a display device for presentation to a user. It is to be appreciated that the presentation device 102 may also be embodied as an apparatus combining the functionality of a display device and a set-top box, DVR or the like.

The presentation device 102 may receive a video stream in any format (e.g., analog or digital format), and present the video stream to the user 106. In at least one embodiment, the presentation device 102 may filter a received video stream to skip portions of the video stream. More particularly, in at least one embodiment, the presentation device 102 may filter a video stream by identifying data in the video stream or associated with the video stream that may be correlated with boundaries for portions of the video stream. For example, the presentation device 102 may parse the text data (e.g., the closed captioning data or subtitles) for a video stream to identify the boundaries for various portions of the video stream. In at least one embodiment, the presentation device 102 may receive metadata including instructions for parsing the text data to identify the boundaries in the video stream. The identified boundaries may then be utilized for determining which portions of the video stream will be presented to the user 106.

The content source 104 may comprise any system or apparatus configured to provide presentation data, such as a video stream, to the presentation device 102. The content source 104 may be external or internal to the presentation device 102. The presentation device 102 and the content source 104 may be communicatively coupled through any type of wired or wireless connection, communication network and the like. Exemplary content sources include television distribution systems (e.g., over the air distribution systems, cable television distribution systems, satellite television distribution systems and broadband distribution systems), DVD players and other optical disk players, digital storage mediums (e.g., DVRs) and the internet. The video stream provided by the content source 104 may include text data, such as subtitles or closed captioning data. The text data may be embedded in the video stream (e.g., in vertical blanking interval line 21 or user data) or may be provided in a separate data stream. In at least one embodiment, the content source 104 may further provide metadata to the presentation device 102 that is utilized for filtering of the video stream. The metadata is discussed in greater detail below. Thus, through the operation of the entertainment system 100, the user 106 is presented with a filtered version of a video stream. Entertainment system 100 may include other elements or components not illustrated for the sake of brevity.

FIG. 2 illustrates an embodiment of a content distribution system 200. The content distribution system 200 is configured to present a filtered video stream to a user 106. The content distribution system 200 includes a DVR 202, a display device 204, a transmission network 206 and a content provider 208. Each of these components is discussed in greater detail below.

The display device 204 may comprise any type of device operable for receiving and displaying analog and/or digital video signals. In at least one embodiment, the display device 204 may be a television set or video display that contains an integrated television converter device (e.g., an internal cable-ready television tuner housed inside a television), or, alternatively, that is connected to an external television converter device for receiving and demodulating analog and/or digital signals for presentation on the display device 204 (e.g., a set-top box).

Using an integrated television converter device, the display device 204 may be operable to communicate directly with the transmission network 206. For example, the transmission network 206 may comprise an over-the-air distribution system (e.g., free television), and the display device 204 may receive television broadcast signals using an internal or external antenna. The transmission network 206 may also comprise a cable television distribution system, and the display device 204 may comprise a cable ready television adapted to receive and demodulate analog or digital cable television signals for presentation to the user 106. A direct broadcast satellite or other type of wired or wireless communications network may also be used solely or in conjunction with the foregoing. In at least one embodiment, the display device 204 may communicate with the transmission network 206 through an intermediate device, such as a set-top box.

The DVR 202 is communicatively coupled to the display device 204 through any type of wired or wireless connection. Exemplary wired connections include coax, fiber, composite video and high-definition multimedia interface (HDMI). Exemplary wireless connections include WiFi and Bluetooth. In at least one embodiment, the DVR 202 may be embodied in a television converter device (e.g., a satellite television receiver). The DVR 202 may also be incorporated into the display device 204.

The DVR 202 captures and records video content from attached devices onto a storage medium for subsequent presentation to the user 106. As illustrated in FIG. 2, the DVR 202 is coupled to a content provider 208 (e.g., a satellite television provider) through the transmission network 206. Thus, the DVR 202 receives a television signal (e.g., a broadcast) or other data signal (e.g., digital video data or other data formatted into a video stream) from the transmission network 206, and records television programs and other content provided by the content provider 208. The DVR 202 may perform processing functions to parse text data associated with or embedded in the video stream in order to filter portions of the video stream for presentation on the display device 204. It is to be appreciated that the DVR 202 may capture and record video streams from other non-broadcast services, such as video recorders, DVD players, personal computers or the internet.

The DVR 202 may include a remote control or other input device (not shown) that the user 106 may utilize for remotely operating the DVR 202 and/or the display device 204. More specifically, a remote control may be operable for controlling the presentation of video and/or other data presented by the DVR 202 on the display device 204.

The content provider 208 comprises any source or sources of television or other video signals. In at least one embodiment, the content provider 208 provides a television broadcast signal to the DVR 202 over the transmission network 206. The content provider 208 may provide closed captioning data with the television broadcast signal. The content provider 208 may be a television station that generates and provides the content or may be a television service that provides retransmission of television signals (e.g., a satellite television provider). It is to be appreciated that the content provider 208 may also provide some retransmission services while generating and providing some original or derivative content.

The transmission network 206 may comprise any type of communication network utilized between the DVR 202 and the content provider 208. Exemplary communication networks include television distribution networks (e.g., over the air, satellite and cable television networks), wireless communication networks, public switched telephone networks (PSTN), and local area networks (LAN) or wide area networks (WAN) providing data communication services. The transmission network 206 may utilize any desired combination of wired (e.g., cable and fiber) and/or wireless (e.g., cellular, satellite, microwave, and radio frequency) communication mediums and any desired network topology (or topologies when multiple mediums are utilized). The DVR 202 may communicate with the transmission network 206 through a wired or wireless connection. The transmission network 206 may distribute television broadcast and other data signals in digital or analog form. Exemplary video formats include moving picture expert group (MPEG), flash, Windows Media, and the like. Content distribution system 200 may include other elements or components not illustrated for the sake of brevity.

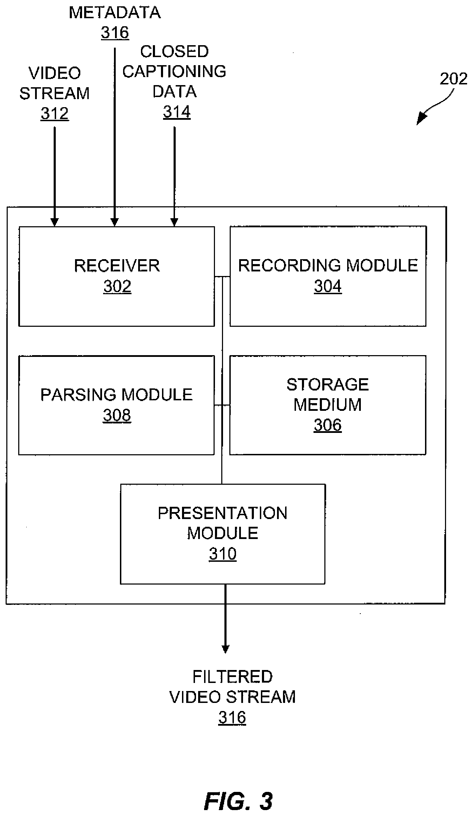

FIG. 3 illustrates an embodiment of functional components of the DVR 202 of FIG. 2. FIG. 3 will be discussed in reference to the content distribution system 200 illustrated in FIG. 2. The DVR 202 comprises a receiver 302, a recording module 304, a storage medium 306, a parsing module 308 and a presentation module 310. Each of these components is discussed in greater detail below.

The receiver 302 receives a video stream 312 and closed captioning data 314 from the transmission network 206 (see FIG. 2). The receiver 302 may comprise a wired or wireless receiver. In at least one embodiment, the closed captioning data 314 is embedded within the video stream 312. The receiver 302 may further receive other data from the transmission network 206, such as metadata 316 instructing the DVR 202 how to parse the closed captioning data 314 to determine boundaries within the video stream 312.

The recording module 304 receives the video stream 312 and the closed captioning data 314, and stores the video stream 312 and the closed captioning data 314 on the storage medium 306. The storage medium 306 may be any type of temporary or persistent storage device capable of storing the video stream 312 and the closed captioning data 314. The storage medium 306 may be internal and/or external to the DVR 202 and may include one or more storage devices. For example, the storage medium 306 may be an internal hard drive or flash memory. The video stream 312 and the closed captioning data 314 may be stored together and/or separately on the storage medium 306.

The parsing module 308 is configured to index the closed captioning data 314 according to a presentation order. In at least one embodiment, the parsing module 308 indexes the closed captioning data 314 during the recording process. In some embodiments, the parsing module 308 may index the closed captioning data 314 subsequent to recording. For example, the parsing module 308 may index the closed captioning data 314 upon receiving a playback instruction from the user 106 (see FIG. 2). The parsing module 308 is further configured to parse the closed captioning data 314 to identify portions of the video stream to skip and/or present during presentation of the video stream 312 using the metadata 316 sent to the DVR 202.

The presentation module 310 is configured to present recorded video streams to the user 106 (see FIG. 2). The presentation module 310 retrieves the video stream 312 and/or the closed captioning data 314 from the storage medium 306, and presents the content of the video stream 312 to the user 106 (see FIG. 2). In at least one embodiment, the presentation module 310 receives information from the parsing module 308 identifying portions of the video stream 312 that are to be skipped and/or shown during presentation. The presentation module 310 filters the video stream 312 to skip portions that are designated for skipping, and presents the filtered video stream 318 to the user 106 (see FIG. 2). In at least one embodiment, the presentation module 310 may remove portions of the video stream 312 that are designated for skipping. If applicable, the presentation module 310 also presents the closed captioning data 314 corresponding to the portions of the filtered video stream 316 that are presented to the user 106.

Those of ordinary skill in the art will appreciate that the various functional elements 302 through 310 shown as operable within the DVR 202 may be combined into fewer discrete elements or may be broken up into a larger number of discrete functional elements as a matter of design choice. For example, the parsing module 308, the recording module 304 and/or the presentation module 310 may be combined into a single processing module. Thus, the particular functional decomposition suggested by FIG. 3 is intended merely as exemplary of one possible functional decomposition of elements within the DVR 202.

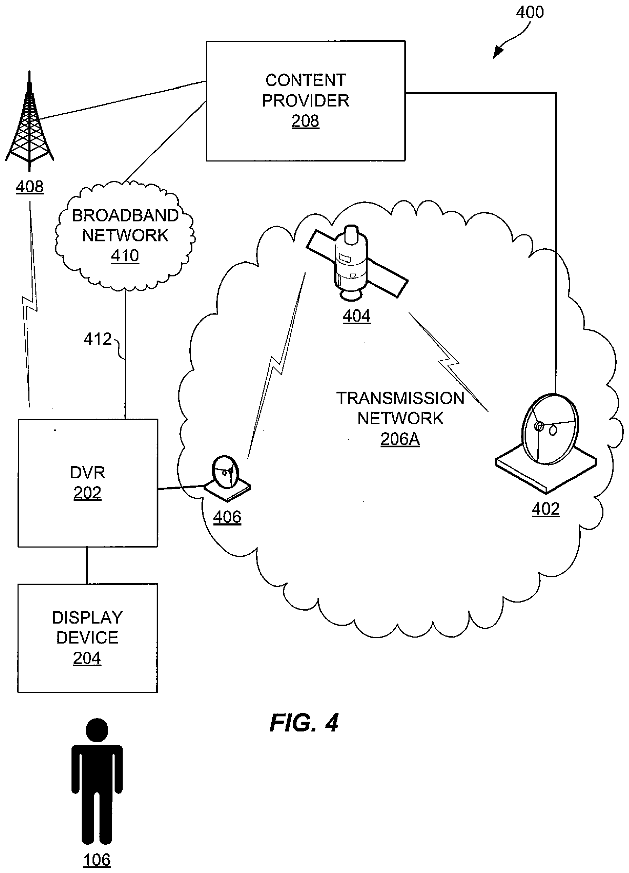

FIG. 4 illustrates an embodiment of a satellite broadcast system 400. More particularly, FIG. 4 illustrates details of a transmission network 206A. Satellite broadcast system 400 will be discussed in reference to content distribution system 200 illustrated FIGS. 2-3.

Satellite broadcast system 400 includes a content provider 208 in signal communication with an uplink system 402 of a transmission network 206A. The content provider 208 provides the uplink system 402 with television programs that are transmitted to a DVR 202. Television programs may be broadcast by the transmission network 206A to the DVR 202. The television program may be embodied as MPEG-2, MPEG-4 or other digital video signals, analog or baseband signals, and/or other video data on a channel of the satellite broadcast system 400.

Satellite broadcast system 400 further comprises a satellite 404 in signal communication with the uplink system 402. The satellite 404 broadcasts television programs received from the uplink system 402. The satellite broadcast system 400 further comprises a satellite antenna 406 for receiving the television program broadcast from the satellite 404. The satellite antenna 406 is in signal communication with the DVR 202, and provides the DVR 202 with the television program. The broadcast television program content is received and stored on the DVR 202, and may be presented on the display device 204 responsive to the user 106 selecting to view the recorded television program. The transmission network 206A may also be configured to transmit metadata and other data to the DVR 202. The metadata may be utilized by the DVR 202 to process the television programming and filter out portions of the television programming.

In at least one embodiment, the DVR 202 may be configured to receive over-the-air television programming from a transmitter 408 using a built in receiver/tuner. For example, the DVR 202 may receive local programming over-the-air, and may receive national programming from the transmission network 206A. In at least one embodiment, the DVR 202 may receive the metadata from the transmitter 408. In some embodiments, the DVR 202 may receive the metadata for the over-the-air programming from the content provider 208 through the transmission network 206A.

As illustrated in FIG. 4, the DVR 202 may optionally be communicatively coupled to the content provider 208 through a broadband network 410 using a broadband connection 412. The broadband connection 412 may be utilized to deliver metadata and/or video programming to the DVR 202. It is to be appreciated that any combination of the described communication paths may be utilized to transmit video programming and/or metadata between the content provider 208 and the DVR 202. For example, the DVR 202 may receive video programming through the transmission network 206A, and may request metadata associated with the video programming from the content provider 208 using the broadband network 410. It is also to be appreciated that the metadata and the video programming may be provided by difference sources (e.g., two different content providers 208).

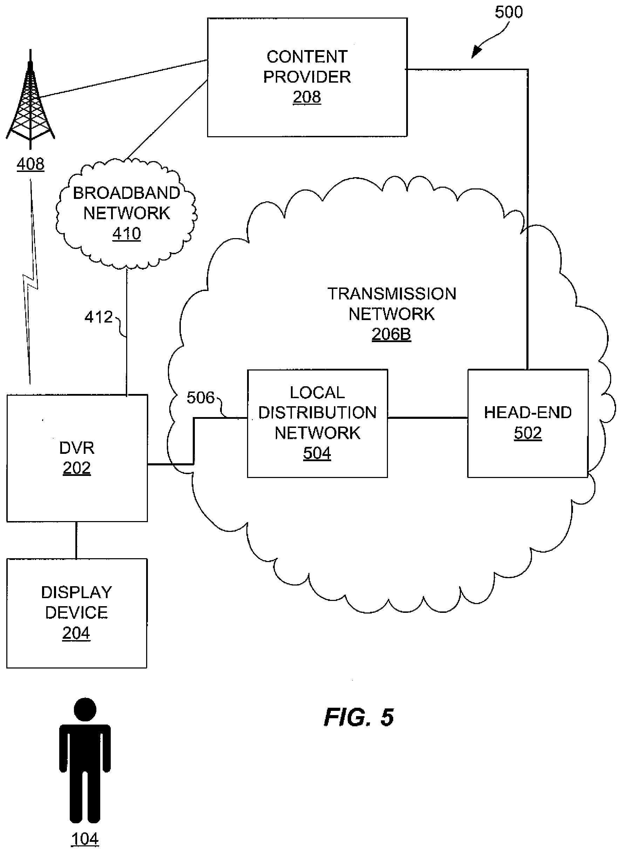

Transmission network 206 (see FIG. 2) may also be embodied in a cable television distribution system. FIG. 5 illustrates an embodiment of a cable television distribution system 500. More particularly, FIG. 5 illustrates details of a transmission network 206B. Cable television distribution system 500 will be discussed in reference to content distribution system 200 illustrated in FIGS. 2-3.

Cable television distribution system 500 comprises a head-end 502 in signal communication with a content provider 208. The content provider 208 provides the head-end 502 with television programs that are transmitted to the display device 204. Television programs may be broadcast by transmission network 206B, or may be pushed to the DVR 202 responsive to a request by the user 106. Television programs may also be pushed to the DVR 202 using a broadband connection 412 through the broadband network 410.

Cable television distribution system 500 further comprises a local distribution network 504 in signal communication with the head-end 502. The local distribution network 504 is operable for receiving content from the head-end 502 and distributing the content to individual display devices 204. The DVR 202 is in signal communication with the local distribution network 504 using a drop 506 from a feeder line of the local distribution network 504. The local distribution network 504 may provide content as a broadcast to the DVR 202, or may provide content to a specific addressable DVR 202 using the broadband connection 412. In at least one embodiment, the broadband network 410 may be integrated within the transmission network 206B.

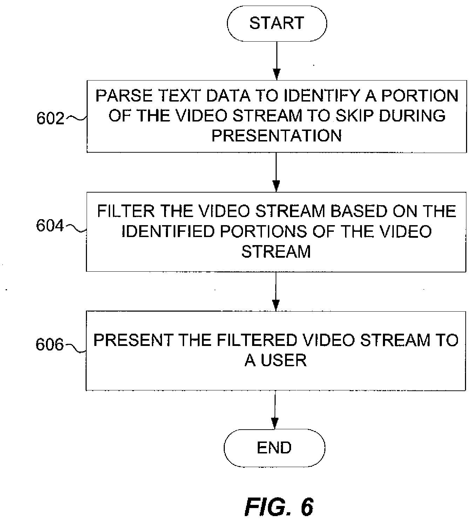

FIG. 6 illustrates an embodiment of a process for filtering a video stream based on text data. The operation of FIG 6 is discussed in reference to filtering a broadcast television program. However, it is to be appreciated that the operation of the process of FIG. 6 may be applied to filter other types of video stream content, such as DVD videos. The operations of the process of FIG. 6 are not all-inclusive, and may comprise other operations not illustrated for the sake of brevity.

The process includes parsing text data associated with a video stream using the metadata to identify portions of the video stream to skip during presentation of the video stream (operation 602). Operation 602 may be performed to skip portions of a video stream for a variety of reasons. For example, a user may desire to skip commercials, portions of a television program or other content which is of no interest to the user, or portions of the video stream which are offensive or should otherwise not be shown to certain users. In at least one embodiment, operation 602 includes parsing the text data in the video stream that is displayable to a user.

In at least one embodiment, a video stream may include a recording of a contiguous block of programming from a television channel (e.g., an episode of a television show). For example, a DVR may record a single channel between 7:00 and 8:00, which may correspond with a single episode of a television program. An hour long recording may include approximately 42 minutes of video frames of the television program, and approximately 18 minutes of video frames of commercials and other content that is not part of the television program.

The television program may be comprised of multiple segments of video frames, which are interspersed with interstitials (e.g., commercials). As used herein, an interstitial is the video frames of a recording that do not belong to a selected show (e.g., commercials, promotions, alerts, and other shows). A segment of video includes contiguous video frames of the program that are between one or more interstitials.

Illustrated in the table below is one exemplary breakdown of the segments and interstitials within a recording of a one hour television program. For example, the recording may include six segments of the program, each including 7 minutes of video frames. Between each pair of segments is 3 minutes of interstitials. The beginning and ending of the recording includes 1.5 minutes of interstitials.

**Table #1 - Exemplary one hour television recording**

| Portion of the recording | Duration (mins) |
|---|---|
| Interstitial #1 | 1.5 |
| Segment #1 | 7 |
| Interstitial #2 | 3 |
| Segment #2 | 7 |
| Interstitial #3 | 3 |
| Segment #3 | 7 |
| Interstitial #4 | 3 |
| Segment #4 | 7 |
| Interstitial #5 | 3 |
| Segment #5 | 7 |
| Interstitial #6 | 3 |
| Segment #6 | 7 |
| Interstitial #7 | 1.5 |
| Total duration | 60 |

A string included within the text data may be utilized to identify specific locations within the video stream. The marked location may be located within a portion of the video stream that is designated for presentation (e.g., part of a television program), or may be within a portion of the video stream that is designated for skipping (e.g., in a portion of the program that a user does not desire to view).

For example, a string may identify a location within segment #1. Once the location is identified within segment #1, the boundaries of segment #1 may be determined. In at least one embodiment, the boundaries of segment #1 are identified using offsets relative to the identified location of a string. For example, if the identified location of the string in segment #1 is 6 minutes into the one hour recording, then an offset of 4.5 minutes prior to the location of the string describes the beginning of segment #1. Likewise, an offset of 2.5 minutes after the location of the string describes the ending of segment #1. A similar process may be utilized with additional strings and offsets to locate the boundaries of the other segments of the video streams. In at least one embodiment, multiple anchor frames, each having different starting and ending offset times, may be utilized within one segment for redundancy.

Thus, the parsing process identifies portions of the video stream that are to be skipped during presentation to a user. In the example illustrated in table #1, operation 602 identifies interstitials #1-7 for skipping during presentation of the video stream. It is to be appreciated that other techniques may also be utilized to determine the boundaries of a segment once a location is identified by the parsing process. For example, a first string may be utilized to identify the location of the beginning boundary of the segment, and a second string may be utilized to identify the location of the ending boundary of the string.

Once the parsing process is complete, portions of the video stream may be filtered prior to presentation. The process further includes filtering the video stream based on the identified portions of the video stream (operation 604) to generate a filtered video stream. The process further includes presenting the filtered video stream to a user (operation 606).

As described above, interstitials #1-7 are designated for skipping during the presentation of the video stream. Thus, segments #1-6 will be presented to the user without the interstitials presented between each segment. The presentation of the television program will start at the beginning of segment #1 (1.5 minutes into the recording), skipping the video frames of interstitial #1. After the ending of segment #1, the presentation will continue at the beginning of segment #2. Therefore, the television user doesn't see the video frames of interstitial #2. In at least one embodiment, an indicator, such as a small icon displayed in a corner of the screen, may be presented to a user to indicate that a portion of the video stream was skipped during the presentation.

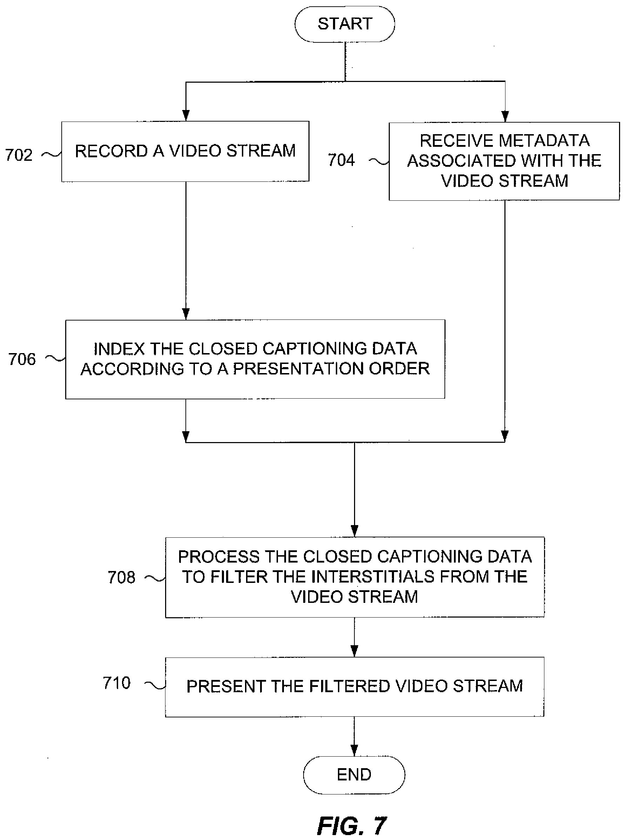

FIG. 7 illustrates an embodiment of a process for filtering interstitials from a video stream based on text data. The operation of FIG 7 is discussed in reference to filtering a broadcast television program. However, it is to be appreciated that the operation of the process of FIG. 7 may be applied to filter other types of video stream content. The operations of the process of FIG. 7 are not all-inclusive, and may comprise other operations not illustrated for the sake of brevity.

The process includes recording a video stream including at least one segment of a show, at least one interstitial of the show, and closed captioning data associated with the segments of the show (operation 702).

The process further includes receiving metadata associated with the video stream that identifies the boundaries of the segments of the show (operation 704). In at least one embodiment, for each segment of the show, the metadata includes a string located within the segment, and a beginning and an ending offset from the string that identifies the boundaries of the segment. Offsets are utilized, because the actual presentation times of the beginning and ending boundaries of the segment may change due to many factors, which are discussed in greater detail below. Operations 702 and 704 may be performed in parallel, or sequentially in either order. For example, the metadata may be received prior to recording the video stream, subsequently to recording the video stream, or at the same time as the video stream.

The process further includes indexing the closed captioning data according to a presentation order (operation 706). Closed captioning data is typically transmitted in two or four byte intervals associated with particular video frames. Because video frames don't always arrive in their presentation order, the closed captioning data is sorted according to the presentation order (e.g., by a presentation time stamp) of the closed captioning data. In at least one embodiment, the indexing process may be performed responsive to receiving the metadata in step 704. Thus, a DVR may not perform the indexing process unless the metadata used to filter the video stream is available for processing. In other embodiments, the closed captioning data may be indexed before the metadata arrives at the DVR. For example, the indexing may be performed in real-time during recording. In at least one embodiment, the sorted closed captioning data is stored in a file and associated with the recorded video stream.

The process further includes processing the closed captioning data, to filter the interstitials from the recorded video stream, based on the metadata, to generate a filtered video stream (operation 708). It is to be appreciated that operation 708 may identify either the boundaries of the segments of the interstitials or the segments of the show to filter the interstitials from the video stream.

In at least one embodiment, operation 708 may include creating segment bookmarks that mark the start and end of a segment. A segment bookmark is a structure created by the recording software. A start segment bookmark points to the start of the segment, and an end segment bookmark points to the end of a segment. The metadata for a segment includes information that specifies the boundaries of one segment. More specifically, in at least one embodiment, the metadata includes a string (which may be unique within the closed captioning data of the recording, or unique within the segments of the show), that is associated with an anchor frame. As used herein, an anchor frame refers to a video frame that contains selected bytes of a closed captioning string. In at least one embodiment, the anchor frame contains the last bytes of the closed captioning string. It is to be appreciated that the anchor frame may be a show frame within the segment, or may be a skip frame within the segment.

By locating the anchor frame, the beginning bookmark may be created based on the anchor frame and the beginning offset. Likewise, the ending bookmark may be created based on the anchor frame and the ending offset. The video frames between a beginning bookmark and an ending bookmark may define the portions of the video stream that are presented to a user.

The process further includes presenting the filtered video stream to a user (operation 710). If segment bookmarks are created, the presentation process includes presenting the segment of the video stream between the beginning bookmark and the ending bookmark. Because the interstitial portions of the video stream are not included within the bookmarks for a segment, they are excluded from presentation to the user.

As described above, the actual presentation times of each segment of a television program within different recordings may vary. For example, two users may not begin recording a program at the same exact points in a broadcast. Thus, there may be a difference in the video frames contained within the recording made by each viewer. Also, many nationally televised shows are broadcast by affiliates of a broadcast network. The broadcast network may have different affiliates in each television market around the country. Each affiliate has some discretion in the location of the interstitials of the television program, and is allowed to insert some of their own content (e.g., local commercials) into various portions of the time slot of the television program. For example, an affiliate may make one of the commercial breaks longer than commercial breaks of other affiliates to accommodate a longer portion of local content, and likewise may make another commercial break shorter in order to offset the difference. Thus, when a television program is recorded in Denver, the recording may not be the same as a television program recorded in New York City.

Table #2 illustrates two exemplary break downs of interstitial and segment durations for two different affiliates transmitting the same television program in two different markets. The duration of each segment doesn't change, but the duration (and content) of each interstitial is different for the two affiliates. Table #3 illustrates exemplary segment and interstitial starting and ending times for each affiliate illustrated in FIG. 2. For example, viewers in NYC and Denver may begin watching or recording a program at 7:00 in their respective time zones. The viewer in NYC will see the beginning of the first segment of the program at 1.5 minutes into the recording, while the viewer in Denver will see the beginning of the first segment of the program at 1 minute into the recording. Regardless of the starting time of the segment, both viewers will see the same content of the segment for the seven minutes following the start of the segment.

**Table #2 - Exemplary one hour recording of a television program for two affiliates.**

| Portion of program | Duration (NYC) | Duration (Denver) |
|---|---|---|
| Interstitial #1 | 1.5 | 1 |
| Segment #1 | 7 | 7 |
| Interstitial #2 | 3 | 3 |
| Segment #2 | 7 | 7 |
| Interstitial #3 | 3 | 4 |
| Segment #3 | 7 | 7 |
| Interstitial #4 | 3 | 3 |
| Segment #4 | 7 | 7 |
| Interstitial #5 | 3 | 2.5 |
| Segment #5 | 7 | 7 |
| Interstitial #6 | 3 | 4 |
| Segment #6 | 7 | 7 |
| Interstitial #7 | 1.5 | 0.5 |
| Total duration | 60 | 60 |

**Table #3 - Exemplary segment and interstitial starting and ending times for a recording from each affiliate.**

| Portion of program | Start NYC | End | Start Denver | End |
|---|---|---|---|---|
| Interstitial #1 | 0 | 1.5 | 0 | 1 |
| Segment #1 | 1.5 | 8.5 | 1 | 8 |
| Interstitial #2 | 8.5 | 11.5 | 8 | 11 |
| Segment #2 | 11.5 | 18.5 | 11 | 18 |
| Interstitial #3 | 18.5 | 21.5 | 18 | 22 |
| Segment #3 | 21.5 | 28.5 | 22 | 29 |
| Interstitial #4 | 28.5 | 31.5 | 29 | 32 |
| Segment #4 | 31.5 | 38.5 | 32 | 39 |
| Interstitial #5 | 38.5 | 41.5 | 39 | 41.5 |
| Segment #5 | 41.5 | 48.5 | 41.5 | 48.5 |
| Interstitial #6 | 48.5 | 51.5 | 48.5 | 52.5 |
| Segment #6 | 51.5 | 58.5 | 52.5 | 59.5 |
| Interstitial #7 | 58.5 | 60 | 59.5 | 60 |

The process of FIG. 7 operates to identify an anchor frame within each segment of the television program. Beginning and ending offsets relative to each anchor frame are then utilized to create beginning and ending bookmarks for the segment. Because the duration and content of each segment is the same, the beginning and the ending of the segment will be the same offset relative to the anchor frame regardless of the presentation times of the anchor frame. For example, an anchor frame for segment #1 may be 2 minutes into the segment (relative to the beginning of the segment). In NYC, this means that the anchor frame has a presentation time of 3.5 minutes into the recording. However, in Denver, the anchor frame has a presentation time of 3 minutes into the recording. Beginning and ending offsets having the same duration are still utilized in both markets, so the beginning bookmark for the NYC recording is created at a presentation time of 1.5 minutes into the recording, and the beginning bookmark for the Denver recording is created at a presentation time of 1.0 minutes into the recording. Thus, each viewer skips over different duration interstitials #1, and begins viewing the same frame of segment #1.

In at least one embodiment, the metadata that includes the strings and offsets utilized to identify the boundaries of a segment may be transmitted to a DVR through a metadata stream and the like. The data that identifies the boundaries of a segment is referred to herein as segment metadata. The show metadata, which may be delivered via a metadata stream, may include segment metadata for one or more segments of the show, and other information, such as the unique program ID (UPID) for the program. Each show may be identified by a UPID. A recording (e.g., one file recorded by a DVR between 7:00 and 8:00) may include multiple UPIDs. For example, if a television program doesn't start exactly at the hour, then the DVR may capture a portion of a program having a different UPID. The UPID allows a DVR to associate a particular show with its corresponding metadata.

Illustrated in table #4 is one exemplary format for segment metadata utilized by the processes of FIGS. 6-7. The segment metadata is carried in the segment_descriptor( ). For error handling in the case of stream corruption or censoring of offensive closed captioning by local affiliates, multiple segment_descriptor( ) may be utilized for a segment. If there are multiple segment_descriptor( ) for a given segment, then the segment_number will be the same for each but the cc string[], start_offset, and end_offset will be different. Basically, alternate anchor frames may be specified for a given segment.

**Table #4 - Example of segment metadata structure.**

| **Syntax** | **no. of bits** | **mnemonic** |
|---|---|---|
| segment_descriptor( ) | | |
| { | | |
| segment_tag | 8 | uimsbf |
| segment_length | 8 | uimsbf |
| segment_number | 8 | uimsbf |
| last_segment_number | 8 | uimsbf |
| cc_string_length | 8 | uimsbf |
| cc_string[] | cc_string_length*8 | char string |
| start_offset | 32 | uimsbf |
| end offset | 32 | uimsbf |
| } | | |

*segment_tag - 0xC1*
*segment_length -* The number of bytes in the segment_descriptor( ) after this field.
*segment_number -* A show normally consists of multiple segments. The segment metadata will be numbered 1 to N in time order (e.g., 1 = first (earliest) segment, N = last (latest) segment).
*last_segment_number* - The number of the last segment_number.
*cc_string_length* - The number of bytes in the closed captioning string (cc_string[]).
*cc_string*[] - The closed captioning bytes in presentation order (not transmission order). The string may include all the bytes carried in a video frame (2 or 4), and may include the bytes from multiple video frames. The string may contain closed captioning bytes from enough video frames to make the string unique within the segment.
*start_offset* - The number of presentation time stamps (PTS) ticks (1/90000 s) from the anchor frame to the video frame that starts the segment. The start_offset points backwards in the recording from the anchor frame.
*end offset -* The number of PTS ticks from the anchor frame to the video frame that starts the interstitial immediately after the segment. The end_offset points forward in the recording.

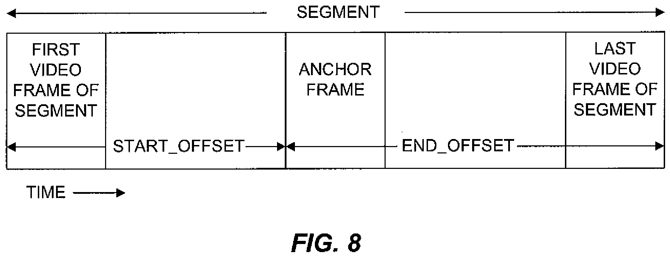

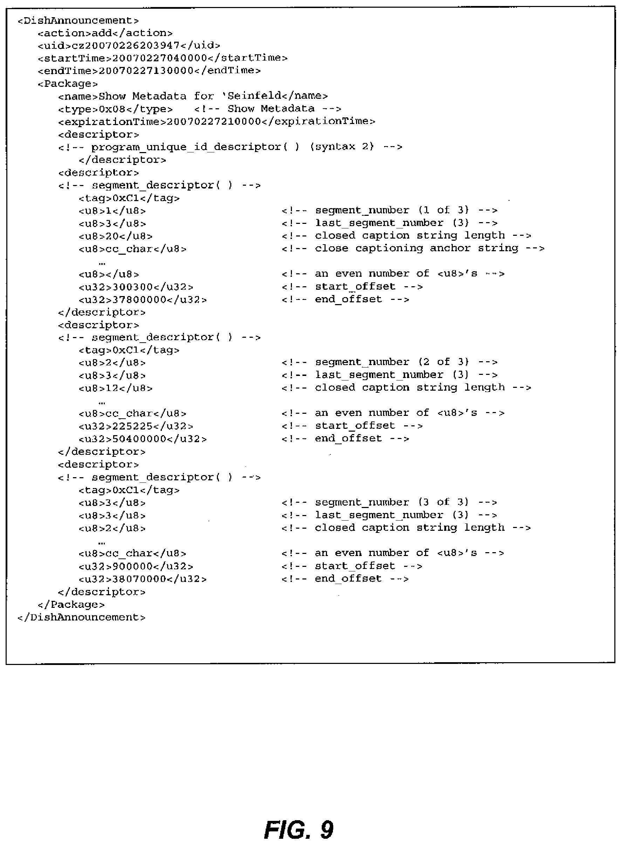

FIG. 8 illustrates the relationship between the variables of the segment metadata. However, it is to be appreciated the other exemplary data formats may be utilized for the segment metadata. FIG. 9 illustrates an example of a metadata stream transmitted to a DVR. A program_unique_id_descriptor() uniquely identifies the show so that the metadata stream may be associated with the correct recording file. The package type in the described example is "Show Metadata".

In at least one embodiment, the DVR records an event, and monitors the metadata stream for "Show Metadata" metadata. If corresponding metadata is found, then the metadata is processed to create segment bookmarks for the show. The segment bookmarks are then utilized to skip the interstitials of the show.

The metadata stream carrying the show metadata may be delivered at any time. Thus, the metadata stream may arrive at a DVR, before, during or after a recording is made. If the metadata stream arrives at the DVR prior to an airing of the show, then the show metadata may be saved for future use should a user later decide to record the show. If a metadata stream arrives at the DVR after the show airs, then the DVR can process the metadata stream to determine whether that particular show has been recorded. If the show has been recorded, then the DVR may begin processing the metadata stream to generate the segment bookmarks. If the show has not been recorded, then the metadata stream may be discarded if the show metadata is not needed by the DVR.

In at least one embodiment, the metadata is stored on a server and delivered responsive to a request from the DVR. For example, the DVR may request the metadata from a server when it records a selected program. The metadata is then delivered to the DVR from the server and utilized to parse the closed captioning data.

A DVR may index the closed captioning data before parsing the closed captioning data. Table 5 illustrates exemplary information utilized to index the closed captioning data.

**Table #5 - Start code detector information**

| Information | Comments |
|---|---|
| Size | The number of closed captioning bytes in the video frame (2 or 4). |
| Closed captioning (CC) bytes | The undecoded (i.e., encoded) closed captioning bytes in the video frame. |
| PTS | The PTS of the video frame that carries the closed captioning bytes. |
| Offset | The byte offset into the transport packet stream to the first transport packet of the video frame that carries the closed captioning bytes. |

In at least one embodiment, the DVR may filter the closed captioning stream and discard pairs of NULL (value = 0x80) closed captioning bytes. There may be 2 or 4 closed captioning bytes per video frame. If the frame contains 2 closed captioning bytes, and both bytes are equal to 0x80, then the bytes may be discarded and not saved. Otherwise, both closed captioning bytes are saved. If the frame contains 4 closed captioning bytes, and the first two bytes are equal to 0x80, then the first two bytes will be discarded and not saved. Otherwise, the first two closed captioning bytes are saved. If the second two bytes are equal to 0x80, then the second two bytes are discarded and not saved. Otherwise the second two closed captioning bytes are saved. The DVR may sort the closed captioning stream so that the closed captioning bytes are in the presentation order. This is because the presentation order is utilized in the segment metadata. The PTS may be used to sort the closed captioning bytes into the presentation order.

The filtered and sorted closed captioning stream may be saved to a storage medium of the DVR, and associated with the recording of the video stream. Illustrated below is an exemplary array structure for storing the filtered, sorted, and indexed closed captioning stream. However, it is to be appreciated that other storage structures may also be utilized.

```
              struct cc_s
        {
              int n; // number of closed captioning bytes in the closed captioning
                     buffer (2 or 4)
              u8 cc[4]; // the undecoded closed captioning bytes (unsigned char data
                     type)
              s64 pts; // 33-bit PTS of the video frame (long long data type)
              u64 offset; // zero-based (0 = 1st byte) offset into the recording
       };
```

As described above, segment bookmarks may be utilized to mark the beginning and ending of a segment. Table #6 illustrates exemplary information contained in the segment bookmarks. It is to be appreciated however, that the segment bookmarks may contain other information than listed in table #6.

**Table #6 - Segment bookmark information**

| Information | Comments |
|---|---|
| Start or End flag | Designates this bookmark as starting a segment or ending a segment, |
| PTS | The PTS of the video frame that starts/ends the segment. |
| Offset | The byte offset into the recording. |

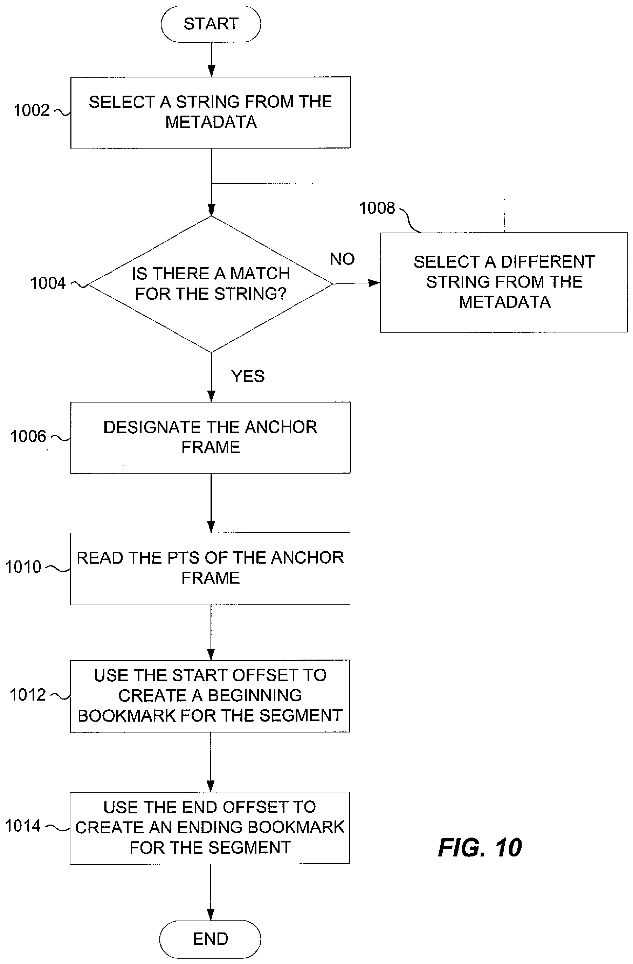

FIG. 10 illustrates an embodiment of a process for creating segment bookmarks of a recording. The operation of FIG 10 is discussed in reference to segment bookmarks for a television program. However, it is to be appreciated that the operation of the process of FIG. 10 may be applied to create segment bookmarks for other types of video stream content. Further, the operations of FIG. 10 are discussed in reference to particular data structures illustrated above. It is to be appreciated, however, that the operations of FIG. 10 may be utilized in accordance with any types of data structures and other suitable types of data. The operations of the process of FIG. 10 are not all-inclusive, and may comprise other operations not illustrated for the sake of brevity.

After recording a show, an index of the closed captioning data for the show and the show metadata associated with the program is processed to create segment bookmarks for each segment of the show. In at least one embodiment, the show metadata is processed in segment_number order, 1 to N, to create the segment bookmarks for the show.

The process includes selecting a string from the metadata for use in identifying a segment (operation 1002). This is selected from a segment_descriptor(). The process further includes matching the cc_string[] from the segment_descriptor() to the closed captioning bytes in the index of the closed captioning data (operation 1004). If a match is found, then the video frame indexed by the closed captioning data is designated as the anchor frame (operation 1006). If a match is not found, then an alternate segment_descriptor( ), if one exists, may be utilized to select an alternate anchor frame (operation 1008), and processing continues at operation 1004. The show metadata may include multiple segment_descriptor() in case there are transmission problems with the closed captioning data. For example, if one or more closed captioning bytes transmitted by a content provider are not received by a DVR, then a match of a segment_descriptor() may not be found. Thus, an alternate segment_descriptor() may be utilized to locate an alternate anchor frame in the segment.

The process further includes determining the PTS of the selected anchor frame (operation 1010). The PTS may be determined from either the video stream, or through the closed captioning data index file. The process further includes creating the beginning bookmark of the segment (operation 1012). The PTS of the video frame at the start of the segment is determined by taking the PTS of the anchor frame and subtracting the start_offset from the segment_descriptor( ). The beginning bookmark points to the PTS of the video frame at the start of the segment. The process further includes creating the ending bookmark of the segment (operation 1014). The PTS of the video frame at the end of the segment is determined by taking the PTS of the anchor frame and adding the end_offset from the segment_descriptor( ). The ending bookmark points to the PTS of the video frame at the end of the segment. In at least one embodiment, modulo arithmetic is utilized to handle cases where the PTS rolls. The segment bookmarks may be created once, and utilized multiple times if the user desires to watch a program on more than one occasion. The operations of the process of FIG. 10 are repeated for any remaining segments (e.g., any remaining segment_descriptor() fields for segments that have not been processed).

Metadata utilized by a DVR to parse the closed captioning data may be captured and generated using a variety of techniques. The generation of metadata involves two processes, identifying transitions and boundaries between the various portions of a video stream, and the identification of text data (e.g., closed captions) that may identify portions of the video stream. It is to be appreciated that identification of the transitions may be performed through human review or through electronic content analysis of the video data of an A/V stream. Likewise, it is to be appreciated that the identification of strings that may identify portions of the presentation stream may also be performed manually by a human reviewer, or may be determined through electronic analysis of the text data of a presentation stream.

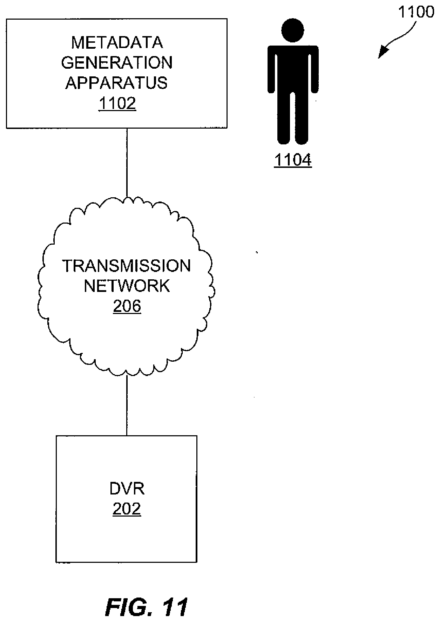

FIG. 11 illustrates an embodiment of a filtering system 1100 for generating metadata utilized by a DVR to filter content from a video stream. The filtering system 1100 includes a metadata generation apparatus 1102, a transmission network 206, and a DVR 202. Each of the components will be discussed in detail below, and the discussion of components common to the figures described above is omitted for brevity.

In the filtering system 1100, a user 1104 examines a video stream to determine boundaries and transition points between the portions of the video stream. The metadata generation apparatus 1102 presents the video stream to the user 1104. The user 1104 watches the video stream, and flags desired transition points between the segments or portions of the video stream. For example, if the video stream contains a television broadcast, then the user may flag the transition between an interstitial and a segment of the television show.

After the transition points between portions of the video stream are indexed or marked, the metadata generation apparatus 1102 identifies the portions of the video stream that are to be skipped and/or presented during presentation of the video stream on the DVR 202. In at least one embodiment, the portion identifications may be performed by the metadata generation apparatus 1102 based on input from the user 1104. For example, the user 1104 may provide input identifying two transition points, and may further identify that the portion of the video stream between transition points 1 and 2 contains an interstitial of the television program. Thus, the metadata generation apparatus 1102 identifies a first segment of the television program, an interstitial of the television program, and a second segment of the television program.

The metadata generation apparatus 1102 is further configured to identify strings in the text data associated with the video stream that identify boundaries of the portions of the video stream, and/or portions of the video stream that are to be skipped and/or presented during playback of the video stream on the DVR 202. In at least one embodiment, the metadata generation apparatus 1102 parses the text data associated with the video stream to identify text strings contained within a segment of the video stream that uniquely identify the segment. In some embodiments, the metadata generation apparatus 1102 may display closed captioning data to the user 1104, and the user 1104 may provide input selecting a text string that may be used to identify a segment or portion of the video stream, and/or a boundary or transition between portions of the video stream.

An anchor frame may be identified based on the selection of the identifying text string. In at least one embodiment, the metadata generation apparatus 1102 determines offsets from the anchor frame(s) to the boundary and/or transition points of a portion or segment of the video segment. The identifying text string, offsets relative to the anchor frame and other associated data represent the metadata generated by the metadata generation apparatus 1102. The metadata is transmitted by the transmission network 206 to the DVR 202. The DVR 202 utilizes the metadata to skip portions of the video stream during presentation of the video stream by the DVR 202. In other words, the metadata instructs the DVR 202 how to parse closed captioning data to determine boundaries or transitions within a video stream.

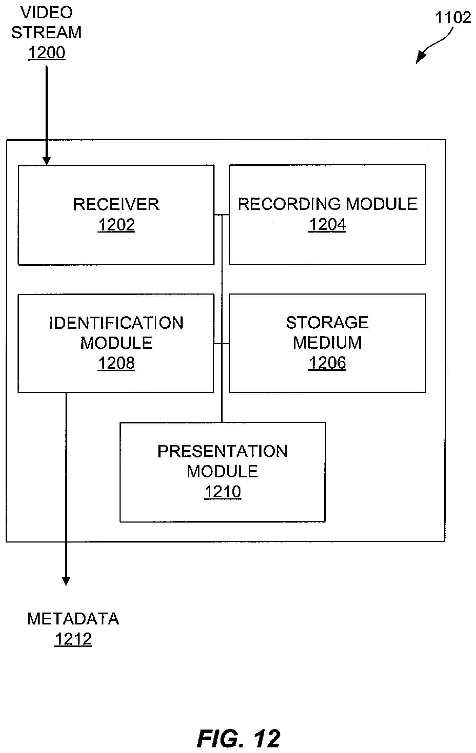

FIG. 12 illustrates an embodiment of functional components of the metadata generation apparatus 1102 of FIG. 11. FIG. 12 will be discussed in reference to the filtering system 1100 illustrated in FIG. 11. The metadata generation apparatus 1102 comprises a receiver 1202, a recording module 1204, a storage medium 1206, an identification module 1208 and a presentation module 1210. Each of these components is discussed in greater detail below.

The receiver 1202 receives a video stream 1200 from a communicatively coupled content provider (e.g., a television station or a satellite television provider). The receiver 1202 may comprise a wired or wireless receiver. In at least one embodiment, the closed captioning data is embedded within the video stream 1200. The content provider may provide a television broadcast, or other type of video stream data to the receiver 1202.

A television broadcast received by the receiver 1202 may be the same as or different than a television broadcast received by a DVR 202 (see FIG. 11). For example, the receiver 1202 may receive a first television broadcast of a television program from a first affiliate in a first time zone, and the DVR 202 may receive a second television broadcast from a second affiliate in a second time zone. The content of the television broadcasts may be different (e.g., different commercials), but the content of the segments of the show is typically the same. In other embodiments, the receiver 1202 may receive a first television broadcast of a television show during a first time slot (e.g., 7:00 P.M.), and the DVR 202 may receive and record a rerun of the television show during a second time slot (e.g., 11:00 P.M.).

The recording module 1204 receives the video stream 1200, and records the video data and text data (e.g., closed captioning data) associated with the video stream onto the storage medium 1206. The storage medium 1206 may be any type of temporary or persistent storage device capable of storing the video stream 1200 and the text data. The storage medium 1206 may be internal and/or external to the metadata generation apparatus 1102. For example, the storage medium 1206 may be an internal hard drive or flash memory. The video stream 1200 and the text data may be stored together and/or separately on the storage medium 1206.

The identification module 1208 is configured to identify transition points and/or boundaries between portions of the video stream. In at least one embodiment, the presentation module 1210 displays the video stream to the user 1104 (see FIG. 11), and the user 1104 provides input marking the boundaries and/or transition points. The presentation module 1210 may allow the user 1104 to rewind and/or fast forward video at greater than or less than normal viewing speed in order to accurately identify the frame of the video stream where the transition occurs.

The identification module 1208 is further configured to index the text data associated with a video stream according to a presentation order. In at least one embodiment, the identification module 1208 indexes the text data during the recording process. In some embodiments, the identification module 1208 may index the text data subsequent to recording. In at least one embodiment, the identification module 1208 is further configured to parse the text data to identify strings in the text data that may identify a portion or segment of the video stream 1200, or the associated transitions or boundaries of the portions of the video stream. In at least one embodiment, the identification module 1208 may present the user 1104 (see FIG. 11) with the content of the text data for selected portions or segments of the video stream using the presentation module 1210, and may allow the user 1104 to select the string(s) that they would like to utilize to identify the segment, portion of the video stream, and/or boundary or transition point of the video stream.

In at least one embodiment, the selected string may be unique within the text data for a recording, or within the text data for the segments of the show. For example, a string "Hello Bobby" may be selected because it is the only instance of that string in the closed captioning data of the show, and that particular string may occur within the first segment of the program, and thus, identifies the first segment. Selected strings may also not be unique within the text data, but may be utilized in some particular order. For example, multiple segments may begin with the phrase "We now return to the show", and the identification module 1208 may select the first occurrence of that string in the closed captioning data to identify the first segment. Likewise, a second occurrence of the string may identify the location of the second segment.

An anchor frame corresponding to the selected string is identified and used as a reference point in the video stream. In at least one embodiment, the anchor frame is chosen as the video frame showing the contents of the selected frame. However, it is to be appreciated that other techniques may be utilized to select the anchor frame. In at least one embodiment, offsets relative to the anchor frame are then calculated to the beginning and/or ending of the segment or portion of the video stream. In other words, offsets are calculated to the boundaries of a portion of the video stream, or to the transition between a segment and an interstitial of the video stream. The offsets, strings and other associated data (e.g., a UPID for a television program) are formatted into appropriate metadata 1212 and provided to a DVR 202 (see FIG. 11). It is to be appreciated that the identification module 1208 may select multiple sets of metadata 1212 for a given portion or segment of a video stream for redundancy purposes as discussed above.

Those of ordinary skill in the art will appreciate that the various functional elements 1202 through 1210 shown as operable within the metadata generation apparatus 1102 may be combined into fewer discrete elements or may be broken up into a larger number of discrete functional elements as a matter of design choice. Thus, the particular functional decomposition suggested by FIG. 12 is intended merely as exemplary of one possible functional decomposition of elements within the metadata generation apparatus 1102.

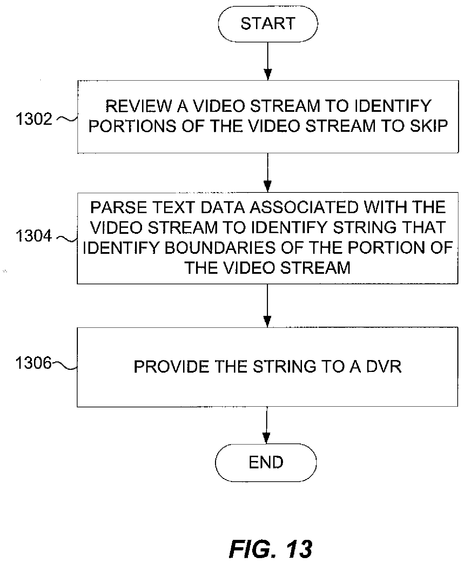

FIG. 13 illustrates a process for generating metadata utilized by a DVR to filter content from a video stream. The operations of the process of FIG. 13 are not all-inclusive, and may comprise other operations not illustrated for the sake of brevity.

The process includes reviewing a video stream to identify at least one portion of the video stream to skip during presentation of the video stream (operation 1302). In at least one embodiment, operation 1302 includes presenting a video stream to a user, and receiving input from the user identifying the boundaries of the portions of the video stream that are to be skipped during subsequent presentations.

The process further includes parsing text data associated with the video stream to identify a string in the text data that identifies at least one boundary of the portion of the video stream (operation 1304). In at least one embodiment, operation 1304 includes identifying a unique string in the closed captioning data, determining a location of the string the video stream, and determining an offset of the boundary relative to the location of the string.

The process further includes providing the string to a DVR (operation 1306). In some embodiments, the process further includes providing the offset to the DVR. In at least one embodiment, the string and/or the offset are broadcast to DVRs in a metadata stream, such as illustrated in FIG. 9. The DVR then utilizes the string and the offset to skip the portion of the video stream during subsequent presentation of the video stream by the DVR.

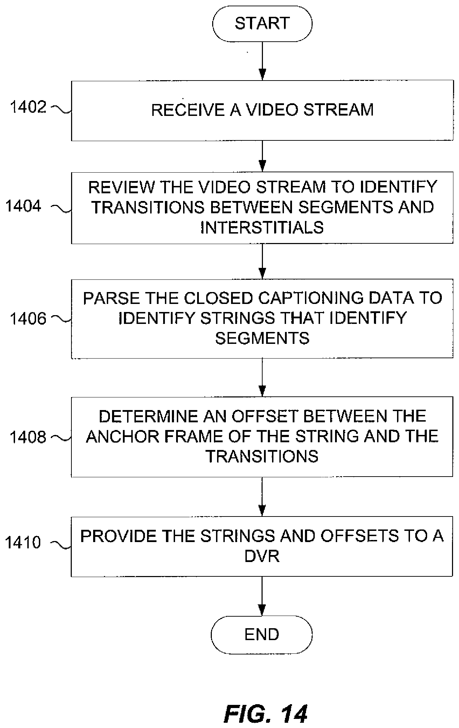

FIG. 14 illustrates a process for generating metadata utilized by a DVR to filter content from a video stream of a television show. The operations of the process of FIG. 14 are not all-inclusive, and may comprise other operations not illustrated for the sake of brevity.

The process includes receiving a video stream including at least one segment of the show, at least one interstitial of the show, and closed captioning data associated with the segments of the show (operation 1402). In at least one embodiment, receiving the video stream includes recording the video stream to a file so that a reviewing user may fast forward, rewind, and/or view the video stream at non-standard viewing speeds (e.g., in a slow motion mode). In at least one embodiment, the television show may be recorded during a first broadcast time (e.g., in a first time zone).

The process further includes reviewing the video stream to identify at least one transition between segments of the show and an interstitial of the show (operation 1404). In at least one embodiment, reviewing the video stream includes presenting the video stream to a user and receiving user input marking a transition between an interstitial of the show and a segment of the television show.

The process further includes parsing the closed captioning data corresponding to segments of the show to locate string(s) that identify a segment of the show within the video stream (operation 1406). The location of a string selected for a segment corresponds to an anchor frame of the segment.

The process further includes determining an offset of a transition relative to the anchor frame (operation 1408). In at least one embodiment, a first offset from the anchor frame is determined relative to a beginning transition of the segment, and a second offset from the anchor frame is determined relative to the ending transition of the segment.

The process further includes providing the string and the offset to a DVR as metadata (operation 1410). In at least one embodiment, the DVR records the show during a second broadcast time that is different than the first broadcast time. For example, the first broadcast time may be in a first time zone, and the second broadcast time may be in a second time zone.

In at least one embodiment, the DVR receives the metadata through the same transmission system as the DVR receives a television broadcast of the television show. The metadata may be transmitted to the DVR as part of a second television broadcast to the DVR. In other embodiments, the metadata is transmitted separately as a metadata stream or other types of out of band data transmissions. In some embodiments, the metadata is provided to the DVR responsive to a request by the DVR for the metadata. For example, a user may record the television program, and the DVR may then request the metadata for the television program in order to enable the skipping of interstitials of the television program.

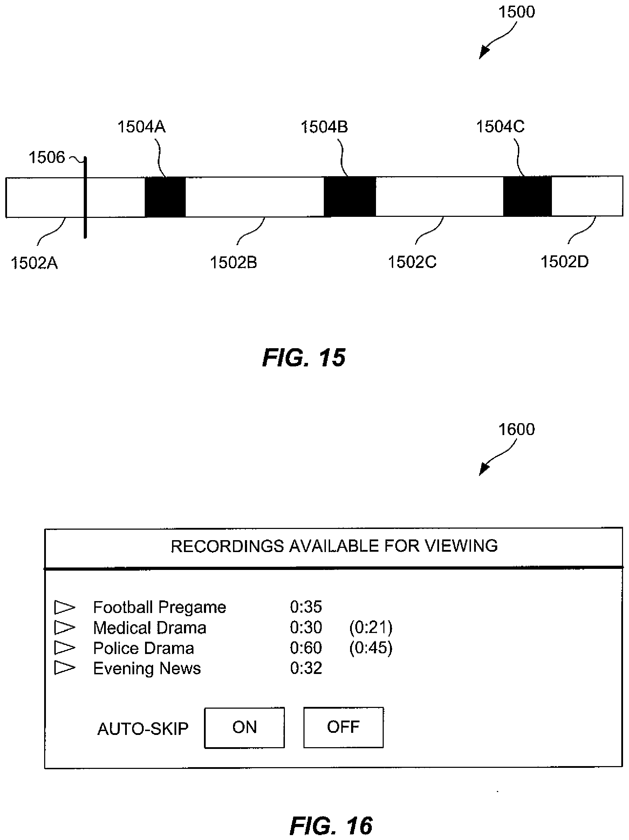

FIG. 15 illustrates an embodiment of a progress bar 1500. The progress bar 1500 presents the location of the segments 1502A-1502D of a recording. The progress bar 1500 also presents the location of the interstitials 1502A-1502D of the recording. A cursor 1506 indicates the current playback position within the recording. In at least one embodiment, a first indicator is utilized to illustrate the segments 1502A-1502D, and a second indicator is utilized to illustrate the interstitials 1504A-1504C of the recording. For example, the segments 1502A-1502D may be presented as white shapes, while the interstitials 1504A-1504C may be presented as darker colored shapes, such as black or grey.

FIG. 16 illustrates a menu 1600 of recordings on a DVR available for playback. The menu 1600 illustrates four recordings of television shows which are available for viewing by a user. For each recording, the menu 1600 presents a name of the recording (e.g., a name of the television show) and a total duration of the recording. If a recording has an "auto-skip" feature available, then the menu 1600 also presents a duration of a filtered version of the recording (e.g., with no interstitials). For example, in the menu 1600, the Football Pregame has a total duration of 0:35, and an auto-skip feature is not available for this recording. Similarly, the Evening News has a total duration of 0:32, and a filtered version of this recording is unavailable. For the Medical Drama, the recording has a duration of 0:30, and the filtered version of the recording has a duration of 0:21. Likewise, the Police Drama has a duration of 0:60, and the filtered version has a duration of 0:45. The information presented in the menu 1600 allows a user to accurately determine how long it will take to watch the various versions of the recordings. It is to be appreciated that the timing information may be provided to a user in other screens of the DVR, such as a description screen regarding a particular recording.

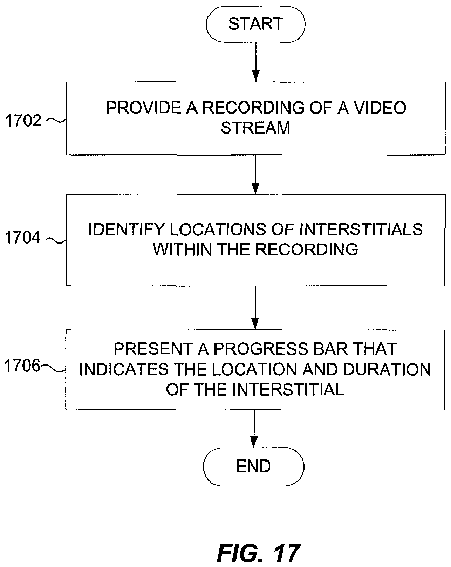

FIG. 17 illustrates an embodiment of a process for providing a user with locations of interstitials in a video stream of a show. The operations of the process of FIG. 17 are not all-inclusive, and may comprise other operations not illustrated for the sake of brevity.

The process includes providing a recording of a video stream including at least one segment of the show and at least one interstitial of the show (operation 1702). In at least one embodiment, operation 1702 may include recording the video stream and capturing text data associated with the video stream (e.g., closed captioning data).

The process further includes identifying a location of at least one interstitial within the recording (operation 1704). In at least one embodiment, operation 1704 may include parsing text data associated with the video stream to identify the location of the interstitials (and/or transitions between interstitials and segments) within the recording. More particularly, in at least one embodiment, parsing the text data to identify locations of the interstitials (and/or transition points between interstitials and segments of the show may be performed as described in the process of FIG. 10.

The process further includes presenting a progress bar during presentation of the video stream that indicates the locations of the interstitials within the recording (operation 1706). In at least one embodiment, the locations of the interstitials are presented using a different indicator than the location of the segments of the show within the recording (e.g., in different colors). The process may optionally include determining a duration of the interstitial, and presenting the duration of the interstitial in association with the presentation of the video stream. For example, the duration of the interstitial may be overlaid on a portion of the progress bar that indicates the location of the interstitial.

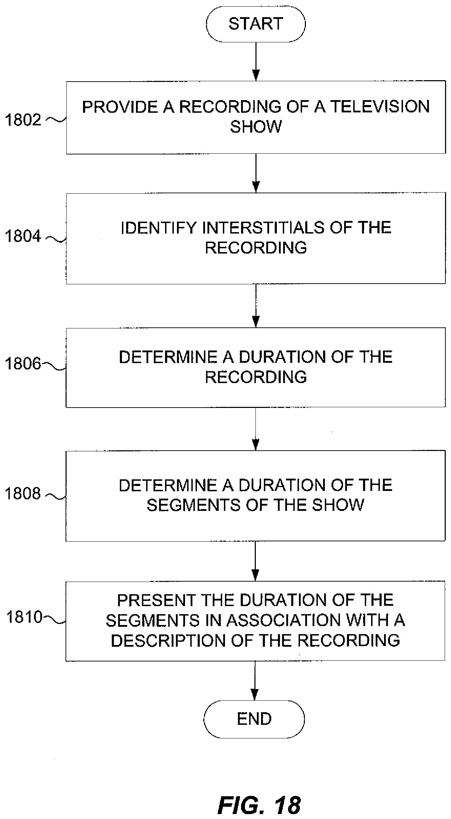

FIG. 18 illustrates an embodiment of a process for presenting information regarding a recorded television show. While the operation of the process of FIG. 18 is described in reference to a television show, it is to be appreciated that the process may be applied to present information regarding any type of video content. The operations of the process of FIG. 18 are not all-inclusive, and may comprise other operations not illustrated for the sake of brevity.

The process includes providing a recording of a television show (operation 1802). The recording may include at least one segment of the show, at least one interstitial and text data associated with the segments and/or interstitials. In at least one embodiment, operation 1802 may include identifying the recording stored on a storage medium of a DVR, and determining which of the recordings include identifiable interstitials.

The process further includes identifying the interstitials of the recording (operation 1804). In at least one embodiment, the identification process may be performed based on the text data associated with the video stream, as described above.

The process further includes determining a duration of the recording (operation 1806). The process further includes determining a duration of the segments of the recording (operation 1808). In at least one embodiment, the durations of the segments are determined from information in the metadata. The segment durations indicated in the metadata may be added together to determine the total segment durations for the show. In some embodiments, the durations of the segments are determined by calculating the durations of the interstitials of the recording, and subtracting the duration of the interstitials from the total duration of the recording. This may be performed in conjunction with or separately from an interstitial filtering process. Thus, in at least one embodiment, the duration of the segments is essentially the duration of the video frames of the recording that do not include interstitial content.

The process further includes presenting the duration of the segments of the show in association with a description of the recording (operation 1810). In at least one embodiment, operation 1810 may also include presenting the total duration of the recording, and/or the total duration of the interstitials of the recording. Thus, if interstitials are to be filtered from the recording, then a user will be presented with the duration of the remaining content of the recording. However, it is to be appreciated that the process of FIG. 18 may be utilized separately from the filtering processes described above.

## Claims

1. A method for filtering a video stream, the method comprising:
recording a video stream (312) broadcast by a content provider (208) over one of a plurality of local distribution networks including plural segments of a show, plural interstitials of the show, and closed captioning data (314) associated with the segments of the show, wherein the closed captioning data comprises a sequence of bytes associated with particular frames of the video stream (312);
receiving metadata (316) from the content provider associated with the video stream (312), identifying boundaries of the segments of the show,
the metadata comprising for each segment of the show:
a first text string and a second text string that is different from the first text string, each contained in the closed captioning data transmitted by the content provider (208) such that bytes of that text string match bytes in the closed captioning data, wherein the first and second text strings are associated with respective anchor frames of the segment, an anchor frame being a frame of the video stream (312) associated with selected matching bytes of the text string,
for each of the first and second text strings, a first offset, associated with the text string, that identifies a beginning of the segment relative to the anchor frame for that text string, and
for each of the first and second text strings, a second offset, associated with the text string, that identifies an end of the segment relative to the anchor frame for that text string;
for each segment of the show, parsing the recorded closed captioning data (314) to locate the first text string for that segment by matching the bytes of the first text string with bytes of the closed captioning data, and if first text string is not located in the recorded closed captioning data, parsing the recorded closed captioning data (314) to locate the second text string for that segment by matching the bytes of the second text string with bytes of the closed captioning data, and
locating the anchor frame that is associated with the text string for that segment that has been located in the closed captioning data and applying the first and second offsets associated with that text string to the anchor frame to identify the beginning and ending of the segment;
filtering the interstitials from the recorded video stream, based on the identified beginning and ending of the segments; and
presenting the filtered video stream to a user.

2. A method as claimed in claim 1, wherein the text string is unique within the closed captioning data.

3. A digital video recorder (202) comprising:
a receiver (302) for receiving a video stream (312) broadcast by a content provider (208) over one of a plurality of local distribution networks including plural segments of a show, plural interstitials of the show, and closed captioning data (314) associated with the segments of the show, wherein the closed captioning data comprises a sequence of bytes associated with particular frames of the video system,
and for receiving metadata (316) from the content provider associated with the video stream (312), identifying boundaries of the segments of the show,
the metadata comprising, for each segment of the show:
a first text string and a second text string that is different from the first text string, each contained in the closed captioning data transmitted by the content provider (208) such that bytes of that text string match bytes in the closed captioning data, wherein the first and second text strings are associated with respective anchor frames of the segment, an anchor frame being a frame of the video stream (312) associated with selected matching bytes of the text string,
for each of the first and second text strings, a first offset, associated with the text string, that identifies a beginning of the segment relative to the anchor frame for that text string, and
for each of the first and second text strings, a second offset, associated with the text string, that identifies an ending of the segment relative to the anchor frame for that text string;
recording means (304) arranged to store the video stream on a storage medium (306) for subsequent presentation to a user;
parsing means (308) arranged to, for each segment of the show, parse the recorded closed captioning data to locate the first text string for that segment by matching the first text string with the bytes of the closed captioning data, and if the first text string is not located in the recorded closed captioning data, to parse the recorded closed captioning data to locate the second text string by matching the second text string with the bytes of the closed captioning data, the parsing means being further arranged to locate the anchor frame that is associated with the text string for that segment that has been located in the closed captioning data and apply the first and second offsets associated with that text string to the anchor frame to identify the beginning and ending of the segment;
presentation means (310) for filtering the at least one interstitial from the recorded video stream based on the identified beginning and ending of the segments, and for presenting the filtered video stream to the user.

4. A digital video recorder as claimed in Claim 3, wherein the text string is unique within the closed captioning data.

5. A digital video recorder as claimed in any of Claims 3 to 4, wherein the presentation means (310) is arranged to present an indicator to the user that the at least one interstitial was skipped during the presentation of the video stream.

## Patentansprüche

1. Verfahren zum Filtern eines Video-Streams, wobei das Verfahren Folgendes umfasst:
Aufzeichnen eines Video-Streams (312), der von einem Inhaltsanbieter (208) ausgestrahlt wird über eines einer Vielzahl von lokalen Verteilungsnetzwerken, einschließlich mehrerer Segmente einer Sendung, mehrerer Interstitials der Sendung und Untertiteldaten (314), die mit den Segmenten der Sendung verbunden sind, wobei die Untertiteldaten eine Sequenz von Bytes umfassen, die mit bestimmten Videobildern des Video-Streams (312) verbunden sind;
Empfangen von Metadaten (316) vom Inhaltsanbieter, die mit dem Video-Stream (312) verbunden sind, wobei Grenzen der Segmente der Sendung aufgezeigt werden und wobei die Metadaten für jedes Segment der Sendung Folgendes umfassen:
eine erste Zeichenfolge und eine zweite Zeichenfolge, die unterschiedlich zur ersten Zeichenfolge ist, wobei jede in den Untertiteldaten enthalten sind, die vom Inhaltsanbieter (208) übertragen wurden, so dass Bytes aus dieser Zeichenfolge Bytes in den Untertiteldaten entsprechen, wobei die erste und zweite Zeichenfolge
mit jeweiligen Ankereinzelbildern des Segmentes verbunden sind, wobei ein Ankereinzelbild ein Standbild des Video-Streams (312) ist, das mit bestimmten übereinstimmenden Bytes der Zeichenfolge verbunden ist,
für jede der ersten und zweiten Zeichenfolge, einen ersten Versatz, der mit der Zeichenfolge verbunden ist, der einen Anfang des Segmentes relativ zum Ankereinzelbild für diese Zeichenfolge identifiziert, und
für jede der ersten und zweiten Zeichenfolge, einen zweiten Versatz, der mit der Zeichenfolge verbunden ist, der ein Ende des Segmentes relativ zum Ankereinzelbild für diese Zeichenfolge identifiziert;
für jedes Segment der Sendung, Analysieren der aufgezeichneten Untertiteldaten (314), um die erste Zeichenfolge für dieses Segment zu finden, indem die Bytes der ersten Zeichenfolge mit Bytes der Untertiteldaten abgeglichen werden, und falls die erste Zeichenfolge nicht in den aufgezeichneten Untertiteldaten enthalten ist, Analysieren der aufgezeichneten Untertiteldaten (314), um die zweite Zeichenfolge für dieses Segment zu finden, indem die Bytes der zweiten Zeichenfolge mit Bytes der Untertiteldaten abgeglichen werden; und
Finden des Ankereinzelbildes, das mit der Zeichenfolge dieses Segmentes verbunden ist, die in den Untertiteldaten gefunden wurde, und Anwenden des ersten und zweiten Versatzes, die mit dieser Zeichenfolge verbunden sind, an das Ankereinzelbild, um den Anfang und das Ende des Segmentes zu identifizieren;
Filtern der Interstitials aus dem aufgezeichneten Video-Stream, basierend auf dem identifizierten Anfang und Ende der Segmente; und Präsentieren des gefilterten Video-Streams an einen Nutzer.

2. Verfahren nach Anspruch 1, wobei die Zeichenfolge einzigartig innerhalb der Untertiteldaten ist.

3. Digitaler Videorekorder (202), der Folgendes umfasst:
einen Empfänger (302) zum Empfangen eines Video-Streams (312), der von einem Inhaltsanbieter (208) ausgestrahlt wird über eines einer Vielzahl von lokalen Verteilungsnetzwerken, einschließlich mehrerer Segmente einer Sendung, mehrerer Interstitials der Sendung und Untertiteldaten (314), die mit den Segmenten der Sendung verbunden sind, wobei die Untertiteldaten eine Sequenz von Bytes umfassen, die mit bestimmten Videobildern des Videosystems verbunden sind,
und zum Empfangen von Metadaten (316) vom Inhaltsanbieter, die mit dem Video-Stream (312) verbunden sind, wobei Grenzen der Segmente der Sendung aufgezeigt werden,
wobei die Metadaten für jedes Segment der Sendung Folgendes umfassen:
eine erste Zeichenfolge und eine zweite Zeichenfolge, die unterschiedlich zur ersten Zeichenfolge ist, wobei jede in den Untertiteldaten enthalten sind, die vom Inhaltsanbieter (208) übertragen wurden, so dass Bytes aus dieser Zeichenfolge Bytes in den Untertiteldaten entsprechen, wobei die erste und zweite Zeichenfolge mit jeweiligen Ankereinzelbildern des Segmentes verbunden sind, wobei ein Ankereinzelbild ein Standbild des Video-Streams (312) ist, das mit bestimmten übereinstimmenden Bytes der Zeichenfolge verbunden ist,
für jede der ersten und zweiten Zeichenfolge, einen ersten Versatz, der mit der Zeichenfolge verbunden ist, der einen Anfang des Segmentes relativ zum Ankereinzelbild für diese Zeichenfolge identifiziert, und
für jede der ersten und zweiten Zeichenfolge, einen zweiten Versatz, der mit der Zeichenfolge verbunden ist, der ein Ende des Segmentes relativ zum Ankereinzelbild für diese Zeichenfolge identifiziert;
Aufzeichnungsmittel (304) angeordnet, um den Video-Stream auf einem Speichermedium (306) zu speichern für anschließende Präsentation an einen Nutzer;
Analysemittel (308) angeordnet, um für jedes Segment der Sendung die aufgezeichneten Untertiteldaten zu analysieren, um die erste Zeichenfolge für das Segment zu finden, indem die erste Zeichenfolge mit den Bytes der Untertiteldaten abgeglichen werden, und falls die erste Zeichenfolge sich nicht in den aufgezeichneten Untertiteldaten befindet, um die aufgezeichneten Untertiteldaten zu analysieren, um die zweite Zeichenfolge zu finden, indem die zweite Zeichenfolge mit den Bytes der Untertiteldaten abgeglichen werden, wobei das Analysemittel ferner angeordnet wird, um das Ankereinzelbild zu finden, das mit der Zeichenfolge für dieses Segment verbunden ist, die in den Untertiteldaten gefunden wurde, und um den ersten und zweiten Versatz anzuwenden, die mit der Zeichenfolge am Ankereinzelbild verbunden sind, um den Anfang und das Ende des Segmentes zu identifizieren;
Präsentationsmittel (310) zum Filtern des mindestens einen Interstitials aus dem aufgezeichneten Video-Stream basierend auf dem identifizierten Anfang und Ende der Segmente und zum Präsentieren des gefilterten Video-Streams an den Nutzer.

4. Digitaler Videorekorder nach Anspruch 3, wobei die Zeichenfolge einzigartig innerhalb der Untertiteldaten ist.

5. Digitaler Videorekorder nach einem der Ansprüche 3 bis 4, wobei die Präsentationsmittel (310) so angeordnet sind, dass sie dem Nutzer einen Indikator präsentieren, dass das mindestens eine Interstitial während der Präsentation des Video-Streams übersprungen wurde.

## Revendications

1. Méthode de filtrage d'un flux vidéo, la méthode comprenant :
l'enregistrement d'un flux vidéo (312) diffusé par un fournisseur de contenu (208) sur un d'une pluralité de réseaux de distribution locaux, y compris de multiples segments d'une émission, de multiples interstitiels de l'émission, et des données de sous-titrage (314) associées aux segments de l'émission, les données de sous-titrage comprenant une séquence d'octets associée avec des trames particulières du flux vidéo (312) ;
réception de métadonnées (316) du fournisseur de contenu associé avec le flux vidéo (312), identifiant des limites des segments de l'émission, les métadonnées comprenant, pour chaque segment de l'émission :
une première chaîne de texte et une deuxième chaîne de texte, différente de la première chaîne de texte, chaque chaîne étant contenue dans les données de sous-titrage transmises par le fournisseur de contenu (208), de sorte que des octets de cette chaîne de texte correspondent à des octets des données de sous-titrage, les première et deuxième chaînes de texte étant
associées avec des trames d'ancrage respectives du segment, une trame d'ancrage étant une trame du flux vidéo (312) associée avec des octets correspondants de la chaîne de texte,
pour chacune des première et deuxième chaînes de texte, un premier décalage, associé avec la chaîne de texte, identifiant un début d'un segment relatif à la trame d'ancrage pour cette chaîne de texte, et
pour chacune des première et deuxième chaînes de texte, un deuxième décalage, associé avec la chaîne de texte, identifiant une fin du segment relatif à la trame d'ancrage pour cette chaîne de texte ;
pour chaque segment de l'émission, l'analyse des données de sous-titrage enregistrées (314) afin de localiser la première chaîne de texte pour ce segment en assortissant les octets de la première chaîne de texte à des octets des données de sous-titrage, et, si la première chaîne de texte n'est pas positionnée dans les données de sous-titrage enregistrées, l'analyse des données de sous-titrage enregistrées (314) afin de localiser la deuxième chaîne de texte pour ce segment en assortissant les octets de la deuxième chaîne de texte avec des octets des données de sous-titrage, et
la localisation de la trame d'ancrage associée avec la chaîne de caractères pour ce segment, localisée dans les données de sous-titrage, et l'application des premier et deuxième décalages associés avec cette chaîne de texte à la trame d'ancrage afin d'identifier le début et la fin du segment ;
le filtrage des interstitiels du flux vidéo enregistré, sur la base du début et de la fin identifiés des segments ; et
la présentation du flux vidéo filtré à un utilisateur.

2. Méthode selon la revendication 1, la chaîne de texte étant unique dans le cadre des données de sous-titrage.

3. Magnétoscope numérique (202) comprenant :
un récepteur (302) pour la réception d'un flux vidéo (312) diffusé par un fournisseur de contenu (208) sur un d'une pluralité de réseaux de distribution locaux, y compris de multiples segments d'une émission, de multiples interstitiels de l'émission, et des données de sous-titrage (314) associées aux segments de l'émission, les données de sous-titrage comprenant une séquence d'octets associée avec des trames particulières du système vidéo ;
et pour la réception de métadonnées (316) du fournisseur de contenu associé avec le flux vidéo (312), l'identification de limites des segments de l'émission,
les métadonnées comprenant, pour chaque segment de l'émission :
une première chaîne de texte et une deuxième chaîne de texte, différente de la première chaîne de texte, chaque chaîne étant contenue dans les données de sous-titrage transmises par le fournisseur de contenu (208), de sorte que des octets de cette chaîne de texte correspondent à des octets des données de sous-titrage, les première et deuxième chaînes de texte étant associées avec des trames d'ancrage respectives du segment, une trame d'ancrage étant une trame du flux vidéo (312) associé avec des octets correspondants sélectionnés de la chaîne de texte,
pour chacune des première et deuxième chaînes de texte, un premier décalage, associé avec la chaîne de texte, identifiant un début d'un segment relatif à la trame d'ancrage pour cette chaîne de texte, et
pour chacune des première et deuxième chaînes de texte, un deuxième décalage, associé avec la chaîne de texte, identifiant une fin du segment relatif à la trame d'ancrage pour cette chaîne de texte ;
un dispositif d'enregistrement (304) agencé pour enregistrer un flux vidéo sur un support de stockage (306) pour une présentation ultérieure à un utilisateur ;
un dispositif d'analyse (308) agencé, pour chaque segment de l'émission, pour analyser les données de sous-titrage enregistrées afin de localiser la première chaîne de texte pour ce segment en assortissant la première chaîne de texte avec les octets des données de sous-titrage, et si la première chaîne de texte n'est pas localisée dans les données de sous-titrage enregistrées, pour analyser les données de sous-titrage enregistrées afin de localiser la deuxième chaîne de texte en assortissant la deuxième chaîne de texte avec les octets des données de sous-titrage, le dispositif d'analyse étant agencé en outre pour localiser la trame d'ancrage associée avec la chaîne de texte pour ce segment, qui a été localisée dans les données de sous-titrage, et appliquer les premier et deuxième décalage associés avec cette chaîne de texte sur la trame d'ancrage afin d'identifier le début et la fin du segment ;
un dispositif de présentation (310) pour le filtrage de l'au moins un interstitiel du flux vidéo enregistré, basé sur le début et la fin identifiés des segments, et pour la présentation du flux vidéo filtré à l'utilisateur.

4. Magnétoscope numérique selon la revendication 3, la chaîne de texte étant unique dans le cadre des données de sous-titrage.

5. Magnétoscope numérique selon une quelconque des revendications 3 à 4, le dispositif de présentation (310) étant agencé pour présenter un indicateur à l'utilisateur d'après lequel l'au moins un interstitiel a été sauté au cours de la présentation du flux vidéo.
